(19) Europäisches Patentamt
European Patent Office
Office européen des brevets

(11) EP 4 723 627 A1

(12) EUROPEAN PATENT APPLICATION

(43) Date of publication:
**08.04.2026 Bulletin 2026/15**

(21) Application number: **24306638.8**

(22) Date of filing: **07.10.2024**

(51) International Patent Classification (IPC):
***H04N 19/12*** ^(2014.01)^ ***H04N 19/157*** ^(2014.01)^
***H04N 19/70*** ^(2014.01)^

(52) Cooperative Patent Classification (CPC):
**H04N 19/12; H04N 19/157; H04N 19/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **DUMAS, Thierry**
  **35700 RENNES (FR)**
- **URBAN, Fabrice**
  **35235 THORIGNE-FOUILLARD (FR)**
- **REUZE, Kevin**
  **35700 RENNES (FR)**
- **CHEN, Ya**
  **35700 RENNES (FR)**

(74) Representative: **Vossius & Partner**
**Patentanwälte Rechtsanwälte mbB**
**Siebertstraße 3**
**81675 München (DE)**

# (54) ENRICHING IMPLICIT SIGNALING OF TRANSFORMS

(57) A video decoding device may obtain available information associated with a coding block, CB, receive transform syntax element(s) associated with the CB, derive mapping information based on the transform syntax element(s) associated with the CB, convert the available information into transform indices using the mapping information, identify a transform kernel from a set of transform kernels using the transform indices, and decode the CB using the identified transform kernel. The available information associated with the CB may comprise an index of an intra prediction mode selected to predict the CB, a number of non-zero transform coefficients associated with the CB, a shape of the CB, and/or a number of non-zero coefficients. The device may (e.g., further) apply the identified transform kernel to a set of dequantized coefficients or to a set of reconstructed coefficients.

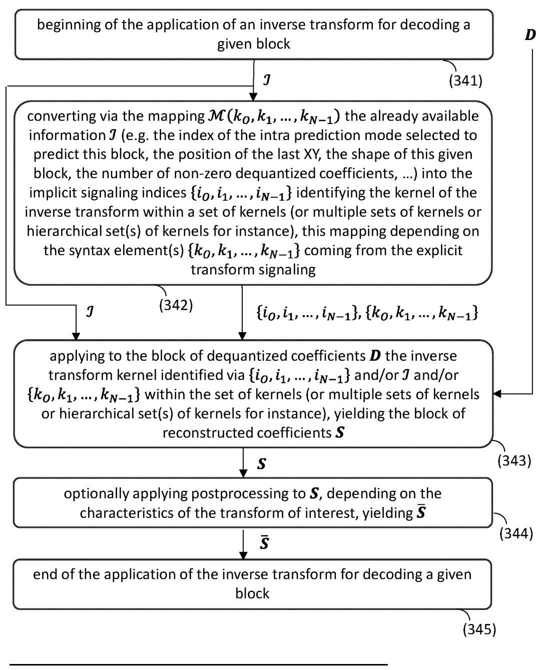


FIG. 8

EP 4 723 627 A1

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for performing video coding (e.g., encoding and/or decoding) using implicit signaling of transforms. In examples, a device (e.g., a video decoding device) may (e.g., be configured to) obtain available information associated with a coding block (CB). In examples, the CB may be a luma CB or a chroma CB. In examples, the available information associated with the CB may comprise at least one of: an index of an intra prediction mode selected to predict the CB, a number of non-zero transform coefficients associated with the CB, a shape of the CB, or a number of non-zero coefficients.

In examples, the prediction mode may be a template matching prediction (TMP) mode, an extrapolation-based intra prediction (EIP) mode, or a neural network-based intra prediction mode. Based on a determination that the prediction mode is the EIP mode, received transform syntax elements may indicate using a first intra prediction mode and a second intra prediction mode to predict the CB.

The device may receive one or more transform syntax elements associated with the CB. In examples, the received one or more transform syntax elements may indicate that a prediction mode is selected to predict the CB.

The device may derive mapping information based on at least one of the received one or more transform syntax elements associated with the CB. The device may convert the available information into transform indices using the mapping information. The transform indices and the received one or more transform syntax elements may be associated with a low frequency non-separable transform (LFNST) or a NSPT.

The device may identify a transform kernel from a set of transform kernels using the transform indices. In examples, the set of kernels may comprise multiple sets of kernels or one or more hierarchical sets of kernels.

In examples, the device may apply the identified transform kernel to a first set of coefficients associated with the CB to generate a second set of coefficients. The device may decode the CB using the generated second set of coefficients. In examples, the first set of coefficients may be a set of dequantized coefficients or a first set of reconstructed coefficients. The second set of coefficients may be a second set of reconstructed coefficients. The first set of reconstructed coefficients may be a set of inverse-secondary transformed dequantized coefficients. In examples, the second set of coefficients may be generated using at least one of: the transform indices identifying the transform kernel, the available information, or the transform syntax elements.

The device may decode the CB using the identified transform kernel.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 illustrates an example of a prediction of the current $w \times h$ block $Y$ from the context $X$ of reference samples around $Y$ via an NN-based intra prediction mode.

FIG. 5 illustrates an example of intra prediction mode signaling for the current $w \times h$ luma CB.

FIGS. 6A-6D illustrate flowcharts and logic tables showing examples of the application of an inverse non-separable transform for decoding the current $w \times h$ luma CB or the current pair of $w \times h$ chroma CBs.

FIG. 7 illustrates an example of reading from the bitstream the index lfnstIdx for decoding a block at the decoder side.

FIG. 8 illustrates a flowchart showing an example of a dependency of implicit transform signaling on the syntax elements given by explicit transform signaling, e.g., for an inverse transform of interest, for a block to be decoded, inside a hybrid block-based video codec, according to an embodiment.

FIG. 9 illustrates a flowchart showing an example of a dependency of implicit transform signaling on syntax elements given by explicit transform signaling, e.g., for an inverse transform of interest, for a block to be decoded, inside a hybrid block-based video codec, according to an embodiment.

FIG. 10 illustrates an example of mapping from the syntax element of the prediction mode and *idxMap*$_i$*i* ∈ {NSPT, LFNST} for a block to be decoded at the decoder side, according to an embodiment.

FIG. 11 illustrates an example of receiving in a bitstream and/or reading from the bitstream the index *lfnstIdx* for decoding a block at the decoder side, according to a variant embodiment.

FIG. 12 illustrates an example of mapping from the syntax element of the prediction mode and *idxMap*$_i$*i* ∈ {NSPT, LFNST} for a block to be decoded at the decoder side, according to an embodiment.

FIG. 13 illustrates an example of receiving in a bitstream and/or reading from the bitstream the index *lfnstIdx* for decoding a block at the decoder side, according to an embodiment.

FIG. 14 illustrates an example of mapping from the syntax element of the prediction mode and *idxMap*$_i$*i* ∈ {NSPT, LFNST} for a block to be decoded at the decoder side, according to an embodiment.

FIG. 15 illustrates an example of receiving in a bitstream and/or reading from the bitstream the index *lfnstIdx* for decoding a block at the decoder side, according to an embodiment.

FIG. 16 illustrates an example of mapping from the syntax element of the prediction mode and *idxMap*$_i$*i* ∈ {NSPT, LFNST} for a block to be decoded at the decoder side, according to an embodiment.

FIG. 17 illustrates an example of receiving in a bitstream and/or reading from the bitstream the index *lfnstIdx* for decoding a block at the decoder side, according to an embodiment.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description. The terms block and coding block may be used interchangeably herein.

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C*, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for performing video coding using (e.g., enriched) implicit signaling of transforms.

Video coding (e.g., hybrid block-based video coding) may be performed by an encoder/decoder, which may include at least one intra prediction module and/or at least one transform module.

Neural network-based intra prediction may refer to an intra prediction tool in which a series of one or multiple (e.g., several) layers (e.g., a layer including an affine (or linear) transformation that may be followed by a non-linear function) compute prediction of a current block from already reconstructed pixels around the current block. Examples of "neural network-based intra prediction" include, for example, one or more of the following (e.g., as described herein): neural network-based intra prediction, Matrix-based Intra Prediction (MIP), and/or matrix-based intra prediction.

Neural network (NN)-based intra prediction may be implemented in Neural Network Video Coding (NNVC). Hybrid block-based video codec utilization of a neural network for video coding on top of Versatile Video Coding (VVC) may be referred to as Neural Network Video Coding (NNVC). Neural network (NN)-based intra prediction may operate, for example, as described herein.

A neural network may be used to generate one or more inferences. A NN-based intra prediction mode may include one or more (e.g., seven (7)) NNs, Each of multiple NNs may predict blocks of a different size, for example, {4 × 4,8 × 4, 16 × 4, 32 × 4, 8 × 8,16 × 8,16 × 16}. The NN predicting blocks of size w × h may be denoted $f_{h,w}(.\,;\theta_{h,w})$, where $\theta_{h,w}$ may gather its parameters. For a $w \times h$ block $Y$, $f_{h,w}\{.\,;\theta_{h,w})$ may take a preprocessed version $\tilde{X}$ of the context $X$ made of $n_a$ rows of $n_l + 2w + e_w$ reference samples located above the block and $n_l$ columns of $2h + e_h$ reference samples on the left side of the block to provide $\dot{Y}$. The application of postprocessing to $Y$ may yield a prediction $\hat{Y}$ of $Y$, e.g., as shown by example in FIG. 4. One or more (e.g., two) indices, e.g., grpIdx$_1$ and grpIdx$_2$, may be returned by $f_{h,w}(.\,;\theta_{h,w})$. Index grpIdx$_i$ may denote an index characterizing the Low Frequency Non-Separable Transform (LFNST) set index. Index grpIdx$_i$ may indicate whether the primary transform coefficients (e.g., resulting from the application of a transform (e.g., Discrete Cosine Transform (DCT)-2 transform) horizontally and vertically to the residue of the neural network prediction) may be transposed, for example, if/when lfnstIdx = $i$, $i \in \{1, 2\}$. lfnstIdx may denote the LFNST index. In some examples, lfnstIdx = 0 may indicate that LFNST may not be used for coding $Y$. In some examples, lfnstIdx $\in \{1, 2\}$ may indicate that LFNST may be used for coding $Y$, e.g., involving the kernel of index lfnstIdx - 1 inside the LFNST set of a given index. The NN predicting blocks of size w × $h$ denoted $f_{h,w}(.\,;\theta_{h,w})$ may give the index repIdx $\in [\![0, 66]\!]$ of the VVC intra prediction mode (e.g., PLANAR, DC, or directional intra prediction mode) whose prediction of $Y$ from the reference samples surrounding $Y$ may best represent $\hat{Y}$.

FIG. 4 illustrates an example of a prediction of the current $w \times h$ block $Y$ from the context $X$ of reference samples around $Y$ via an NN-based intra prediction mode. In some examples, $w = 8$ and $h = 4$. In some examples, $n_a = n_l = e_h = e_w = 4$.

Signaling may be provided for prediction of luma and chroma coding blocks.

Intra prediction mode signaling in luma may be split into multiple (e.g., two) cases, for example, for the current $w \times h$ luma Coding Block (CB), e.g., whose top-left pixel may be at position $(x, y)$ in the current luma channel. Intra prediction mode signaling for prediction of a luma CB may include, for example, one or more of the following cases: if $w \times h \in T$ is true; and if it is false.

In some examples where $w \times h \in T$ is true, an nnFlag may appear in the intra prediction mode signaling associated with the luma CB. A value of a flag (e.g., nnFlag = 1) may indicate that the NN-based intra prediction mode may be selected to predict the current luma CB and END. A value of the flag (e.g., nnFlag = 0) may indicate that the NN-based intra prediction mode may not be selected to predict the current luma CB, in which case the regular intra prediction mode signaling in luma (e.g., denoted $S_{\subset}$) may be applied, e.g., as shown by example in FIG. 5.

In some examples of the case where $w \times h \in T$ is false, the regular intra prediction mode signaling in luma $S_{\subset}$ may be applied.

In some examples, $T$ = {4 × 4, 4 × 8, 8 × 4, 4 × 16, 16 × 4, 4 × 32, 32 × 4, 8 × 8, 8 × 16, 16 × 8, 8 × 32,32 × 8,16 × 16,16 × 32,32 × 16,32 × 32, 64 × 64}.

In the case "w × $h \in T$ && nnFlag = 1, " the NN-based intra prediction may be replaced by PLANAR, for example, if the context of the current luma CB goes out of the bounds of the current luma channel, e.g., $x < n_l \,\|\, y < n_a$.

FIG. 5 illustrates an example of intra prediction mode signaling for the current $w \times h$ luma CB, which is shown by a dashed line. The coordinates of the pixel at the top-left of the CB are ($x$, $y$). The bin value of an nnFlag value is shown by example as zero (0) or one (1). In some examples, $h$ = 8, w = 4, $x$ = 8, and$y$ = 0.

Signaling may be provided for prediction of a chroma CB. Intra prediction mode signaling for chroma CB prediction may be split into multiple (e.g., two) cases, for example, for the current pair of $w \times h$ chroma CBs having a top-left pixel at position ($x$, $y$) in the current pair of chroma channels. Intra prediction mode signaling in chroma may include, for example, one or more of the following cases: if the luma CB collocated with the pair of chroma CBs is predicted by the NN-based intra prediction mode; and/or if the luma CB collocated with the pair of chroma CBs is not predicted by the NN-based intra prediction mode.

In some examples of the case where the luma CB collocated with the pair of chroma CBs is predicted by the NN-based intra prediction mode, $w \times h \in T$may be true or false. For example, if $w \times h \in T$ is true, the Direct Mode (DM) may become the NN-based intra prediction mode. For example, if $w \times h \in T$ is false, the DM may be set to PLANAR.

In some examples of the case where the luma CB collocated with the pair of chroma CBs is not predicted by the NN-based intra prediction mode, $w \times h \in T$may be true or false. For example, if $w \times h \in T$ is true, a flag (e.g., nnFlagChroma) may be provided in the intra prediction mode signaling for chroma CB. The flag (e.g., nnFlagChroma) may be placed before the DM flag in the decision tree of the intra prediction mode signaling in chroma. A value of the flag (e.g., nnFlagChroma = 1) may indicate that the NN-based intra prediction mode is selected to predict the current pair of chroma CBs and END. A value of the flag (e.g., nnFlagChroma = 0) may indicate that the NN-based intra prediction mode is not selected to predict the current pair of chroma CBs, in which case the regular intra prediction mode signaling in chroma may resume from the DM flag.

For example, if $w \times h \in T$ is false, the regular intra prediction mode signaling in chroma may be applied.

In some examples, e.g., in the case where $w \times h \in T$and the DM is the NN based intra prediction mode and/or the case where "$w \times h \in T$&& nnFlagChroma = 1," the NN-based intra prediction may be replaced by PLANAR, for example, if the context of the current chroma CB goes out of the bounds of the current chroma channel, e.g., $x < n_l \| y < n_a$.

A context may be transformed, for example, for neural network prediction. An NN-based intra prediction mode may predict a block (e.g., a given $w \times h$ block), for example, if $w \times h \in T$. The NN-based intra prediction mode may not include$f_{h,w}(\,.\,;\theta_{h,w})$, in which case the context of the current block may be down-sampled vertically (e.g., by a factor $\delta$), down-sampled horizontally (e.g., by a factor $\gamma$), and/or transposed (e.g., before "preprocessing" shown by example in FIG. 4). The prediction of the current block may be transposed and/or up-sampled vertically (e.g., by the factor $\delta$) and/or up-sampled horizontally (e.g., by the factor y), for example, after "postprocessing" (as shown by example in FIG. 4). The transposition of the context of the current block and the prediction, $\delta$, and/or $\gamma$ may be chosen, for example, so that a neural network belonging to the NN-based intra prediction mode may be used for prediction, e.g., as shown by example in Table 1.

Table 1 - Examples of decisions that determine whether to transpose the context of the current $w \times h$ block to be predicted and the prediction of the block, select the value of $\gamma$, select the value of $\delta$, and select the neural network belonging to the NN-based intra prediction mode that may be used for prediction for each $w \times h \in T$.

| $w \times h$ | transposition | $\gamma$ | $\delta$ | NN used for prediction |
|---|---|---|---|---|
| 4 × 4 | no | 1 | 1 | $f_{4,4}(\,.,\theta_{4,4})$ |
| 8 × 4 | no | 1 | 1 | $f_{4,8}(\,.,\theta_{4,8})$ |
| 4 × 8 | yes | 1 | 1 | $f_{4,8}(\,.,\theta_{4,8})$ |
| 16 × 4 | no | 1 | 1 | $f_{4,16}(\,.,\theta_{4,16})$ |
| 4 × 16 | yes | 1 | 1 | $f_{4,16}(\,.,\theta_{4,16})$ |
| 32 × 4 | no | 1 | 1 | $f_{4,32}(\,.,\theta_{4,32})$ |
| 4 × 32 | yes | 1 | 1 | $f_{4,32}(\,.,\theta_{4,32})$ |
| 8 × 8 | no | 1 | 1 | $f_{8,8}(\,.,\theta_{8,8})$ |
| 16 × 8 | no | 1 | 1 | $f_{8,16}(\,.,\theta_{8,16})$ |
| 8 × 16 | yes | 1 | 1 | $f_{8,16}(\,.,\theta_{8,16})$ |
| 32 × 8 | no | 2 | 1 | $f_{8,16}(\,.,\theta_{8,16})$ |
| 8 × 32 | yes | 1 | 2 | $f_{8,16}(\,.,\theta_{8,16})$ |
| 16 × 16 | no | 1 | 1 | $f_{16,16}(\,.,\theta_{16,16})$ |
| 32 × 16 | no | 2 | 1 | $f_{16,16}(\,.,\theta_{16,16})$ |
| 16 × 32 | no | 1 | 2 | $f_{16,16}(\,.,\theta_{16,16})$ |
| 32 × 32 | no | 2 | 2 | $f_{16,16}(\,.,\theta_{16,16})$ |
| 64 × 64 | no | 4 | 4 | $f_{16,16}(\,.,\theta_{16,16})$ |

Matrix-based intra prediction may replace other (e.g., conventional) intra prediction modes (e.g., in Enhanced Compression Model (ECM)). A block may be predicted, for example, by multiplying weights by the reference samples inside an L-shape causal neighborhood template around the block to compute the prediction samples, which may replace other (e.g., conventional) intra prediction. The L-shape causal neighborhood template may be identical to the L-shape causal neighborhood template shown on the left side of FIG. 4, e.g., if/when $n_a = n_l = 4$ and $e_h = e_w = 0$. A $w \times h$ block may be predicted, for example, by denoting the vector of $k \in \mathbb{N}^*$ reference samples in the L-shape causal neighborhood template as $\tilde{X}$ and the matrix of $khw$ weights as $W$. The vector $Y$ of $hw$ predicted samples may be computed, for example, via the vector-matrix multiplication shown in Eq. (1).

$$\dot{Y} = \tilde{X}W \qquad (1)$$

The replacement of (e.g., conventional) intra prediction modes by matrix-based intra prediction may be enabled, for example, (e.g., only) for block sizes of $w \leq 16$ and $h \leq 16$, and/or for modes of indices 0, 1, and $2 + 4 * i$, where $i = \{0, 1, 2, ..., 16\}$, e.g., every 4 modes. The term "conventional" intra prediction mode may refer to an intra prediction mode in {PLANAR, DC, 65 directional intra prediction modes}, which may be inherited (e.g., from VVC).

Matrix-based intra prediction (e.g., when enabled to replace other (conventional) intra prediction modes) may not incur extra signaling.

Transforms may be signaled. In some examples, transforms in hybrid block-based video codecs may feature global signaling with one or two components, e.g., an implicit transform signaling and/or an explicit transform signaling. In some examples, at the decoder side of a hybrid block-based video codec, a decoder may decode a block based on implicit transform signaling without reading from the bitstream. In such examples, the decoder may infer the transform syntax, e.g., from already available information. In another example, a decoder may decode a block based on explicit transform signaling by reading bins from the bitstream to obtain the associated transform syntax.

A hybrid block-based video codec (e.g., ECM) may involve utilization of one or more (e.g., many) different primary and/or secondary transform modules. Examples of the signaling of transforms presented with respect to one type of codec (e.g., ECM) may be applicable to other types of codecs.

Low Frequency Non-Separable Transform (LFNST) and/or Non-Separable Primary Transform (NSPT) may be signaled. LFNST may refer to a set of non-separable secondary transforms that may be used in one or more types of video coding (e.g., VVC, ECM). NSPT may correspond to a set of non-separable primary transforms that may be used in one or more types of video coding (e.g., VVC, ECM, etc.).

A decoder may perform decoding based on implicit signaling by an encoder. A block may be decoded at the decoder side, for example, by applying an inverse non-separable transform. FIGS. 6A-6D show examples of the application of an inverse non-separable transform. The examples shown in FIGS. 6A-6D may assume (e.g., before beginning the examples shown in the flowcharts) a scenario, for example, where the current Coding Unit (CU) is decoded in a separate tree or the luma component of the current CU is being decoded and/or that the LFNST index (e.g., $lfnstIdx \in [\![0, 3]\!]$) of the current CU (e.g., previously read from the bitstream) is not equal to zero (0), e.g., indicating LFNST or NSPT may be applicable.

FIGS. 6A-6D illustrate flowcharts and logic tables showing examples of the application of an inverse non-separable transform for decoding the current $w \times h$ luma CB or the current pair of $w \times h$ chroma CBs.

As show in FIG. 6A, at (99), the application of the inverse non-separable transform for decoding the current luma CB or the current pair of chroma CBs may begin.

At (101), if *isNsptAllowed* is true, the process may move on to (102). Otherwise, the process may move on to (172). In some examples, *isNsptAllowed may* depend on the width w and/or the height *h* of the current CB. The value of *isNsptAllowed* may be true, for example, if the current CU is coded in inter and NSPT is allowed in inter by the encoder configuration. The value of *isNsptAllowed* may be true, for example, if $w \times h \in \{4 \times 4, 8 \times 4, 4 \times 8, 8 \times 8, 16 \times 4, 4 \times 16, 16 \times 8, 8 \times 16, 32 \times 4, 4 \times 32, 32 \times 8, 8 \times 32\}$.

At (102), the index $idxMap_{NSPT}$ may be obtained, for example, via (50) as shown in FIG. 6B.

At (103), $idxMap_{NSPT}$ may be converted into $idxMapWide_{NSPT}$, for example, via (51) as shown in FIG. 6C.

At (104), the flag *transposeFlag* (e.g., indicating whether the reconstructed coefficients arising from the application of the inverse primary transform are transposed) may be obtained, for example, via (52) shown in FIG. 6D. The LUT *nsptLut* = g_nsptLut[$idxMapWide_{NSPT}$] may (e.g., also) be obtained. In some examples, "g_nsptLut" may be a mapping with multiple entries (e.g., 97 entries).

At (108), the NSPT kernel of index l*fnsfldx* - 1 belonging to the NSPT set of indexes *nsptLut* (e.g., itself belonging to the NSPT super set depending on $w \times h$) may be applied to the block of dequantized coefficients D, which may yield the block of reconstructed coefficients S'.

At (106), if *transposeFlag* is true, the process may advance to (107).

At (107), the block of reconstructed coefficients *S'* may be transposed, which may yield $\overline{S}$'.

At (172), the index $idxMap_{LFNST}$ may be obtained, for example, via (50) shown in FIG. 6B.

At (173), $idxMap_{LFNST}$ may be converted into $idxMapWide_{LFNST}$, for example, via (51) shown in FIG. 6C.

At (174), the flag *transposeFlag* (e.g., indicating whether the reconstructed coefficients arising from the application of the inverse secondary transform are transposed) may be obtained, for example, via (52) shown in FIG. 6D. The LUT L*fnstLut* = g_lfnstLut[$idxMapWide_{LFNST}$] may (e.g., also) be collected. In some examples, "g_lfnstLut" may be associated with a mapping with multiple entries (e.g., 97 entries).

At (178), the LFNST kernel of index *lfnstIdx*- 1 belonging to the LFNST set of indexes *lfnstLut* (e.g., itself belonging to the LFNST super set depending on $w \times h$) may be applied to the block of dequantized coefficients D, which may yield the block of reconstructed coefficient S.

At (176), if *transposeFlag* is true, the process may move on to (177).

At (177), the block of reconstructed coefficients S may be transposed, yielding $\overline{S}$.

At (181) (e.g., regardless of whether the process comes from (106), (107), (176), or (177)), the application of the inverse non-separable transform for decoding the current luma CB or the current pair of chroma CBs may end.

As shown in FIG. 6B, at (50), the syntax element associated with the prediction mode selected to predict the current block may be mapped to $idxMap_i$, where *i* may be "LFNST" or "NSPT.". The table shown in FIG. 6B at (50) may (e.g., only) consider the current luma CB for conciseness.

As shown in FIG. 6B, at (50), logic and syntax examples are provided for intra and inter prediction modes. For example, in the case where the current CU is coded in intra, syntax may include, *mipFlag, mipDimdMode, sgpmFlag, splitDir,* etc.

For example, *mipFlag* may be a syntax element that represents (e.g., denotes) an MIP flag. A value of *mipFlag* (e.g., one (1)) may indicate, for example, that MIP is selected to predict the current luma CB.

Syntax *mipDimdMode* may represent the index of the intra prediction mode resulting from the application of Decoder side Intra Mode Derivation (DIMD) to the prediction of the current luma CB returned by MIP.

Syntax *sgpmFlag* may represent a Spatial Geometric Partition Mode (SGPM) flag. A value of *sgpmFlag* (e.g., one (1)) may indicate that SGPM is selected to predict the current luma CB.

Syntax *splitDir* may represent an index of the intra prediction following the direction of the partition derived via SGPM.

Syntax *tmpFlag* may represent a Template Matching Prediction (TMP) flag. A value of *tmpFlag* (e.g., one (1)) may indicate that TMP is selected to predict the current luma CB.

Syntax *infraTmpDimdMode* may represent an index of the intra prediction mode arising from the application of Decoder side Intra Mode Derivation (DIMD) to the prediction of the current luma CB returned by TMP.

Syntax *timd* may represent a Template-based Intra Mode Derivation (TIMD) flag. A value of *timd* (e.g., one (1)) may indicate that TIMD is selected to predict the current luma CB.

Syntax *idxIntra* may represent an index of the intra prediction mode representing TIMD, e.g., the first derived TIMD mode if *timd* indicates that TIMD is selected to predict the current luma CB.

In an example, syntax MAP131TO67 may represent a mapping from the index of an intra prediction mode in a space of directions twice denser to the baseline space of directions. In some examples, MAP131TO67(idxIntra) = (idxIntra < 2 ? idxIntra : ((idxIntra >> 1) + 1)).

Syntax *fmrlFlag* may represent a Template-based Multiple Reference Line (TMRL) flag. A value of *tmrlFlag* (e.g., one (1)) may indicate that TMRL is selected to predict the current luma CB.

Syntax *idxIntra* may represent an index of the intra prediction mode representing TMRL, e.g., the first derived TMRL mode if *tmrlFlag* indicates that TMRL is selected to predict the current luma CB.

Syntax *plIdx* may represent a syntax index associated with "horizontal/vertical PLanar" (PL), belonging to {0, 1, 2}. For example, *plIdx* belonging to {1, 2} may indicate that PL is selected to predict the current luma CB.

Syntax *VER_IDX* may represent an index of the vertical intra prediction mode (e.g., 50 in some examples).

Syntax *HOR_IDX* may represent an index of the horizontal intra prediction mode (e.g., 18 in some examples).

Syntax *eipFlag* may represent an Extrapolation-based Intra Prediction (EIP) flag. A value of *eipFlag* (e.g., one (1)) may indicate that EIP is selected to predict the current luma CB.

Syntax *eipDimdMode* may represent an index of the intra prediction mode resulting from the application of Decoder side Intra Mode Derivation (DIMD) to the prediction of the current luma CB returned by MIP.

"Any other flag being true" (e.g., shown on the ninth row of the table in FIG. 6B) may indicate that $idxMap_i$ may be equal to the index *idxIntra* of the intra prediction mode, for example, if the intra prediction mode selected to predict the current luma CB is not MIP, SGPM, TMP, TIMD, TMRL, PL, or EIP. The index *idxIntra* may correspond to the first derived DIMD mode, for example, if the intra prediction mode selected to predict the current luma CB is DIMD.

As shown in FIG. 6B, at (50), in the case the current CU is coded in inter syntax may include *geoFlag, dimdDerivedIntraDir, dimdDerivedIntraDir2nd, lfnsfInfra,* etc.

For example, syntax *geoFlag* may represent a Geometric Partition Mode (GPM) flag. A value of (e.g., One (1)) may indicate that GPM is selected to predict the current luma CB.

Syntax *dimdDerivedIntraDir* may represent an index of the first intra prediction mode, e.g., resulting from the application of DIMD to the prediction of the current luma CB returned by GPM.

Syntax *dimdDerivedIntraDir2nd* may represent an index of the second intra prediction mode, e.g., obtained via the application of DIMD to the prediction of the current luma CB returned by GPM.

Syntax *lfnstIntra* may represent a flag for (e.g., specific to) NSPT/LFNST signaling, e.g., in the case where GPM is selected to predict the current luma CB.

"Any other flag being true" (e.g., shown on the eleventh row of the table in FIG. 6B) may indicate that $idxMap_i$ is equal to *dimdDerivedIntraDir* (e.g., the index of the intra prediction mode that may be obtained, for example, by applying DIMD to the prediction of the current luma CB via the selected inter prediction mode), for example, if the inter prediction mode selected to predict the current luma CB is not GPM.

As shown in FIG. 6C, at (51), *floorLog2* may apply the integer version of logarithm in base 2 with floor operation. The values of *w* and *h* may denote the width and height of the current block. In some examples, NUM_EXT_LUMA_MODE = 30 and/or NUM_LUMA_MODE = 67. In some examples, VDIA_IDX may be the index of the vertical diagonal intra prediction mode (e.g., equal to 66).

As shown in FIG. 6D, at (52), DIA_IDX may be the index of the horizontal diagonal intra prediction mode (e.g., equal to 34).

As shown by example in FIG. 6A (e.g., for a given block to be decoded), the implicit signaling of NSPT may be viewed as going from (102) to (104) included, e.g., using already available information, such as the index of the selected intra prediction mode used to predict the block and/or the block shape, to pick the indices (e.g., excluding *lfnstIdx)* specifying the NSPT kernel to be used. The implicit signaling of LFNST may (e.g., similarly) be viewed as extending from (172) to (174) included, e.g., using already available information to choose the indices (e.g., excluding lfnstIdx) specifying the LFNST kernel to be used.

A decoder may perform decoding based on explicit signaling by an encoder. In some examples, a block may be decoded at the decoder side based on explicit signaling of LFNST/NSPT, which may be summarized as reading from the bitstream the index *lfnstIdx* belonging to {0, 1, 2, 3}. For example (e.g., as shown in FIG. 7), a block may be decoded at the decoder side by reading from the bitstream of the LFNST/NSPT index (e.g., *lfnstIdx).* The example shown in FIG. 7 may assume that (e.g., for the block) it has already been verified that *lfnstIdx* is not inferred to be zero (0) based on already available information, e.g., without reading a (e.g., any) bin from the bitstream.

FIG. 7 illustrates an example of reading from the bitstream the index lfnstIdx for decoding a block at the decoder side.

As shown in FIG. 7, at (221), the reading from the bitstream of the LFNST/NSPT index (e.g., *lfnstIdx)* may start, e.g., knowing that *lfnstIdx* is not inferred to be zero (0) based on available information and/or already read syntax.

At (222), if *isInter* is true, the process may proceed to (223). Otherwise (e.g., if *isInter* is false), the process may advance to (232). The value of *isInter* may be true, for example, if the current CU is decoded in inter.

From (223) to (227), *lfnstIdx* may be read from the bitstream. The operation of decodeBin(Ctx::InterLFNSTIdx(j)) may read a bin from the bitstream, for example, using the associated CABAC context model of index $j$, $j \in \{0, 1, 2\}$.

At (228), if *lfnstIdx* is not equal to zero (0) and GMP is selected to predict the current block, the process may move on to (229). Otherwise (e.g., if *lfnstIdx* is equal to zero (0) or if GMP is not selected to predict the current block), the process may move to (231). At (229), *lfnstIntra* may be read from the bitstream. The operation of decodeBin(Ctx:: InterLFNSTIntraIdx()) may read a bin from the bitstream, for example, using the associated CABAC context model. At (231), *lfnstInfra* may be inferred to be zero (0).

At (232), *lfnstIdx* may be read from the bitstream and *lfnstIntra* may be inferred to be zero (0). If *isSepTree* is true, it may indicate that the current CU is decoded in a separate tree.

At (233) (e.g., regardless of whether the process comes from (229), (231), or (232)), the reading from the bitstream of the LFNST/NSPT index *lfnstIdx* (e.g., knowing that *lfnstIdx* is not inferred to be zero (0) based on available information and/or already read syntax) may end.

As shown by example in FIG. 7, at the decoder side, for a block to be decoded, once it is known that NSPT may apply (e.g., *lfnstIdx* is not equal to zero (0) and *isNsptAllowed* is true), the explicit signaling of NSPT may not condition the implicit signaling of NSPT. For example, *lfnstIdx* does not appear from (102) to (104) in FIG. 6A. Similarly, once it is identified that LFNST may apply (e.g., *lfnsfIdx* is not equal to zero (0) and *isNsptAllowed* is false), the explicit signaling of LFNST may not condition the implicit signaling of LFNST. For example, *lfnstldx* does not appear from (172) to (174). In examples, lack of compression efficiency may be incurred, for example, because the implicit signaling cannot be diversified by varying over values of the syntax elements obtained via the explicit signaling.

Although concepts may be described herein in the context of the signaling of LFNST/NSPT in one type of coding (e.g., ECM), the concepts may be generic (e.g., applicable) to any kind/type of transform signaling in any hybrid block-based video codec.

As described herein, compression efficiency may be improved (e.g., the inefficiency in compression identified herein may be avoided). In a hybrid block-based video codec, the implicit signaling of a (e.g., any) transform may be converted or updated, for example, depending on the values of the syntax elements (e.g., transform syntax elements) received using explicit signaling. Implicit transform signaling, therefore, may be enriched/improved, for example, by conditioning it on the syntax elements received using explicit transform signaling.

For example (e.g., as shown in FIG. 8), a block may be decoded in a hybrid block-based video codec by conditioning on the syntax elements from the explicit transform signaling. The example shown in FIG. 8 may begin after selection of an inverse transform to decode the block.

FIG. 8 illustrates a flowchart showing an example of a dependency of implicit transform signaling via the syntax elements provided by explicit transform signaling associated with an inverse transform of interest, for a block to be decoded in a hybrid block-based video codec.

As illustrated in FIG. 8, at (341), the application of an inverse transform for decoding a block may start.

At (342), e.g., using the mapping $\mathcal{M}$ ($k_0, k_1, ..., k_{N-1}$), the already available information J may be converted into the implicit signaling indices {$i_0, i_1, ..., i_{N-1}$} identifying the kernel of the inverse transform within a set of kernels (or multiple sets of kernels or hierarchical set(s) of kernels for instance). The mapping may depend on the syntax elements {$k_0, k_1, ..., k_{N-1}$} that may be received using explicit transform signaling. For example, $N = 1$. As another example, $N = 8$. As another example, $N = 16$. In an example, $\mathcal{J}$ may correspond to the index of the intra prediction mode that may be selected to predict the block. As another example, $\mathcal{J}$ may be the number of non-zero dequantized transform coefficients for the block. As another example, $\mathcal{J}$ may be the shape of the block. As another example, $\mathcal{J}$ may gather the index of the intra prediction mode selected to predict the block, the number of non-zero dequantized transform coefficients for the block, and/or the shape of the block. In some examples, $\mathcal{J}$ may be generalized to (e.g., any) already available information.

At (343), the inverse transform kernel identified via {$i_0, i_1, ..., i_{N-1}$}, $\mathcal{J}$, and/or {$k_0, k_1, ..., k_{N-1}$} within the set of kernels (e.g., or multiple sets of kernels or hierarchical set(s) of kernels) may be applied to the block of dequantized coefficients *D*, which may yield the block of reconstructed coefficients *S*.

At (344), a postprocessing may be applied to *S*, for example, depending on the characteristics of the transform of interest, which may yield $\overline{S}$.

At (345), the application of the inverse transform for decoding the block may end.

In some examples (e.g., variant(s) of the example shown in FIG. 8), a block may be decoded by applying the inverse transform of interest to a block of reconstructed coefficients, e.g., instead of applying to the block of dequantized coefficients. FIG. 9 shows an example for decoding a block. The example shown in FIG. 9 may assume that an inverse secondary transform has already been applied to the block of dequantized coefficients, which may yield the block of reconstructed coefficients *T*, and/or may assume that the inverse transform of interest corresponds to an inverse primary transform.

FIG. 9 illustrates a flowchart showing an example of a dependency of implicit transform signaling via the syntax elements provided by explicit transform signaling associated with an inverse transform of interest, for a block to be decoded in a hybrid block-based video codec.

As illustrated in FIG. 9, at (400), the application of an inverse transform for decoding a block may start.

At (401), e.g., using the mapping $\mathcal{M}$ ($k_O, k_1, ..., k_{N-1}$), the already available information J may be converted into the implicit signaling indices {$i_0, i_1, ..., i_{N-1}$} identifying the kernel of the inverse transform within a set of kernels (or multiple sets of kernels or hierarchical set(s) of kernels for instance). The mapping may depend on the syntax elements {$k_0, k_1, ..., k_{N-1}$} may be received using explicit transform signaling. For example, $N = 1$. As another example, $N = 8$. As another example, $N = 16$. For example, $\mathcal{J}$ may correspond to the index of the intra prediction mode that may be selected to predict the block. As another example, $\mathcal{J}$ may be the number of non-zero dequantized transform coefficients for the block. As another example, $\mathcal{J}$ may be the shape of the block. As another example, $\mathcal{J}$ may gather the index of the intra prediction mode selected to predict the block, the number of non-zero dequantized transform coefficients for the block, and/or the shape of the block. In some examples, $\mathcal{J}$ may be generalized to (e.g., any) already available information.

At (402), the inverse transform kernel identified via {$i_0, i_1, ..., i_{N-1}$}, *9*, and/or {$k_0, k_1, ..., k_{N-1}$} within the set of kernels (e.g., or multiple sets of kernels or hierarchical set(s) of kernels) may be applied to the block of reconstructed coefficients *T*, which may yield the block of reconstructed coefficients *S*.

At (403), a postprocessing may be applied to *S*, for example, depending on the characteristics of the transform of interest, which may yield $\overline{S}$.

At (404), the application of the inverse transform for decoding the block may end.

Examples described herein may be applied to the transform signaling in other types of video coding (e.g., ECM). Examples may pertain to transforms (e.g., LFNST, NSPT). Transform signaling associated with transforms (e.g., LFNST and NSPT in ECM) may rely on explicit and implicit signaling.

In an example, a coding block may be decoded at the decoder side, for example, based on a dependency between the implicit transform signaling of LFNST/NSPT and the values of the syntax elements received via explicit LFNST/NSPT signaling, e.g., in the case where one or more (specific) intra prediction mode(s) are selected to predict the block. A dependency between the implicit transform signaling of LFNST/NSPT and the values of the syntax elements received using explicit LFNST/NSPT signaling, for example, if/when TMP is selected to predict the current luma CB. An illustration of the example is shown in FIG. 10. As an example, illustration, the example shown in FIGS. 6A-6D may be implemented by replacing the example shown in FIG. 6B, at (50), with the example shown in FIG. 10. As shown in FIG. 10, if *tmpFlag* is true (e.g., indicating TMP may be selected to predict the current luma CB), $idxMap_i$ may be equal to PLANAR_IDX, for example, if *lfnstIdx* is equal to *a* and *lfnstSecFlag* is true. Otherwise (e.g., if *lfnstIdx* is not equal to *a* or if *lfnstSecFlag* is false), $idxMap_i$ may be equal to *infraTmpDimdMode.*

FIG. 10 illustrates an example of mapping from the syntax element of the prediction mode and $idxMap_i i \in$ {NSPT, LFNST} for a CB to be decoded at the decoder side, according to an embodiment.

FIG. 11 illustrates an example of reading from the bitstream the index *lfnstIdx* for decoding a CB at the decoder side, according to a variant embodiment.

In some examples (e.g., based on the example case illustrated in FIG. 10), the CB may be decoded in accordance with the index *lfnstIdx* that may be received using explicit signaling via bitstream. In FIG. 11, at 500, 501, 502, 503, 504, 505, 506, 507, 508, 509, 510 and 513 the decoder may be configured to provide and/or provide features similar to 221, 222, 223, 224, 225, 226, 227, 228, 229, 231, 233, and 232 of FIG. 7 respectively.

As shown in FIG. 11, at (511), if *isLuma* is true (e.g., indicating the currently decoded component is the luma component), *lfnstSecFlag* may be read from the bitstream at (512), for example, if *tmpFLag* is true and *lfnstIdx* is equal to *a.* The operation of decodeBin(Ctx::LFNSTSec(0)) may read a bin from the bitstream, for example, using the associated CABAC context model. In the examples shown in FIG. 10 and FIG. 11, *a* = 1. In other examples, *a* = 3, or the same or a different value.

The example scenarios/cases illustrated in FIG. 10 and FIG. 11 may be extended to multiple values of *lfnstIdx* for the dependency between the implicit signaling of LFNST/NSPT and the values of the syntax elements from the LFNST/NSPT explicit signaling. As an example, illustration, the example shown in FIGS. 6A-6D may be implemented, by replacing the example shown in FIG. 6B, at (50), with the example shown in FIG. 12. As shown in FIG. 12, if *tmpFlag* is true (e.g., indicating TMP may be selected to predict the current luma CB), $idxMap_i$ may be equal to PLANAR_IDX, for example, if *lfnstIdx* belongs to {*a, b*} and *lfnstSecFlag* is true. Otherwise (e.g., if *lfnstIdx* does not belong to {*a, b*} or if *lfnstSecFlag* is false), $idxMap_i$ may be equal to *infraTmpDimdMode.*

FIG. 12 illustrates an example of mapping from the syntax element of the prediction mode and $idxMap_i i \in$ {NSPT, LFNST} for a block to be decoded at the decoder side, according to an embodiment.

In some examples (e.g., based on the example case illustrated in FIG. 13), a block may be decoded using the index *lfnstIdx* that is received via a bitstream.

As illustrated in FIG. 13 the index *lfnstIdx* for decoding a CB at the decoder side may be received in the bitstream. In FIG. 13, at 600, 601, 602, 603, 604, 605, 606, 607, 608, 609, 610 and 613 the decoder may be configured to provide and/or provide features similar to 221, 222, 223, 224, 225, 226, 227, 228, 229, 231, 233, and 232 of FIG. 7 respectively.

As shown in FIG. 13, at (611), if *isLuma* is true(e.g., indicating the currently decoded component is the luma component), *lfnstSecFlag* may be read from the bitstream at (612), for example, if *tmpFLag* is true and *lfnstIdx* belongs to {*a, b*}. In the examples shown in FIG. 12 and FIG. 13, *a* = 1 and *b* = 2. In other examples, *a* = 3 and *b* = 1, among other values.

Examples may be generalized to any intra prediction mode that may be selected to predict a CB. For example, the example shown in FIG. 14 may replace the example shown in FIG. 6B, at (50). The dependency between the implicit transform signaling of LFNST/NSPT and the values of the syntax elements coming from the explicit LFNST/NSPT signaling may occur, for example, if/when EIP is selected to predict the current luma CB. As shown in FIG. 14, if *eipFlag* is true (e.g., indicating EIP may be selected to predict the current luma CB), $idxMap_i$ may be equal to *eipDimdMode2nd,* for example, if *lfnstIdx* is not equal to *c* and *lfnstSecFlag* is true. Otherwise (e.g., if *lfnstIdx* is equal to c or if *lfnstSecFlag* is false), $idxMap_i$ may be equal to *eipDimdMode.* Syntax *eipDimdMode* and *eipDimdMode2nd* may denote, respectively, the index of the first intra prediction and the index of the second intra prediction mode, which may be obtained, for example, by applying DIMD to the prediction of the current luma CB via EIP.

FIG. 14 illustrates an example of mapping from the syntax element of the prediction mode and $idxMap_i i \in$ {NSPT, LFNST} for a block to be decoded at the decoder side, according to an embodiment.

In some examples (e.g., based on the example illustrated in FIG. 14), a CB, at the decoder side, may be decoded by reading from the bitstream of the index *lfnstIdx* , as shown by example in FIG. 15. In FIG. 15, at 700, 701, 702, 703, 704, 705, 706, 707, 708, 709, 710 and 713 the decoder may be configured to provide and/or provide features similar to 221, 222, 223, 224, 225, 226, 227, 228, 229, 231, 233, and 232 of FIG. 7 respectively.

As shown in FIG. 15, at (711), if *isLuma* is true (e.g., indicating the currently decoded component is the luma component), *lfnstSecFlag* may be read from the bitstream at (712), for example, if *eipFLag* is true and *lfnstIdx* is not equal to *c.* The operation of decodeBin(Ctx::LFNSTSec(0)) may read a bin from the bitstream, for example, using the associated CABAC context model. In the examples shown in FIG. 14 and FIG. 15, *c* = 1. In other examples, *c* = 3, e.g., among other values.

Examples may be generalized for one or more (e.g., any additional) conditions may (e.g., be required to) trigger the dependency between the implicit signaling of LFNST/NSPT and the values of the syntax elements from the LFNST/NSPT explicit signaling. For example, a dependency between the implicit transform signaling of LFNST/NSPT and the values of the syntax elements coming from the explicit LFNST/NSPT signaling may occur depending on a condition of the shape of the block to be decoded.

In an example illustration, the example shown in FIG. 16 may replace the example shown in FIG. 6B, at (50). A dependency between the implicit transform signaling of LFNST/NSPT and the values of the syntax elements coming from the explicit LFNST/NSPT signaling may occur, for example, if/when the neural network-based intra prediction mode is selected to predict the current luma CB and the condition *isAllowedShape*(*h, w*) on the shape $w \times h$ of the current luma CB returns true. As shown in FIG. 16, if the index *idxIntra* of the intra prediction mod selected to predict the current luma CB is equal to PNN_IDX (e.g., indicating the neural network-based intra prediction mode may be selected to predict the current luma CB), $idxMap_i$ may be equal to PLANAR_IDX , for example, if *lfnstIdx* belongs to {*a, b*}*,* if *lfnstSecFlag* is true, and if isAllowedShape(*h*, *w*) returns true. Otherwise (e.g., if *lfnstIdx* does not belong to {*a, b*}*,* if *lfnstSecFlag* is false, or if isAllowedShape(*h*, *w*) returns false), $idxMap_i$ may be equal to *nnDimdMode.* Syntax *nnDimdMode* may denote the index of the intra prediction that may be obtained, for example, by applying DIMD to the prediction of the current luma CB, e.g., via the neural network-based intra prediction mode.

FIG. 16 illustrates an example of mapping from the syntax element of the prediction mode and $idxMap_i i \in$ {NSPT, LFNST} for a block to be decoded at the decoder side, according to an embodiment.

In some examples (e.g., based on the example illustrated in FIG. 16), a block may be decoded by the reading from the bitstream of the index *lfnstIdx,* e.g., as shown by example in FIG. 17.

In some examples (e.g., based on the example case illustrated in FIG. 10), the CB may be decoded in accordance with the index *lfnstIdx* that may be received using explicit signaling via bitstream. In FIG. 17, at 800, 801, 802, 803, 804, 805, 806, 807, 808, 809, 810 and 813 the decoder may be configured to provide and/or provide features similar to 221, 222, 223, 224, 225, 226, 227, 228, 229, 231, 233, and 232 of FIG. 7 respectively.

As shown in FIG. 17, at (811), if *isLuma* is true (e.g., indicating the currently decoded component is the luma component), *lfnstSecFlag* may be read from the bitstream at (812), for example, if *idxIntra* is equal to PNN_IDX, if *lfnstIdx* belongs to {*a, b*}*,* and if isAllowedShape(*h*, *w*) returns true. In the examples shown in FIG. 16 and FIG. 17, $a = 1$ and $b = 3$. In other examples, $b = 3$ and $a = 2$, e.g., among other values.

In some examples (e.g., based on the examples illustrated in FIG. 16 and FIG. 17), isAllowedShape(*h*, *w*) may be any condition on the shape $w \times$ h of the current block to be decoded. For example, isAllowedShape(*h*, *w*) may correspond to $!((h == 4 \;\&\&\; w == 4) \,\|\, (h == 4 \,\|\, w == 8) \,\|\, (h == 8 \,\|\, w == 4))$. For (e.g., an alternative) example, isAllowedShape(h, w) may be $hw \geq 64$. For (e.g., another) example, isAllowedShape(h, w) may be $hw \geq 64$. $!((h == 4 \;\&\&\; w == 4) \,\|\, (h == 4 \,\|\, w == 8) \,\|\, (h == 8 \,\|\, w == 4) \,\|\, (h == 4 \,\|\, w == 16) \,\|\, (h == 16 \,\|\, w = = 4) \,\|\, (h == 8 \,\|\, w == 8))$.

In some examples (e.g., based on the examples illustrated in FIG. 16 and FIG. 17), *nnDimdMode* may be replaced by the index returned by the neural network when predicting the current luma CB.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

**1.** A video decoding device comprising:
a processor configured to:

obtain available information associated with a coding block, CB;
receive one or more transform syntax elements associated with the CB;
derive mapping information based on at least one of the received one or more transform syntax elements associated with the CB;
convert the available information into transform indices using the mapping information;
identify a transform kernel from a set of transform kernels using the transform indices; and
decode the CB using the identified transform kernel.

**2.** The video decoding device of claim 1, wherein the set of kernels comprises multiple sets of kernels or one or more hierarchical sets of kernels, and wherein the available information associated with the CB comprises at least one of: an index of an intra prediction mode selected to predict the CB, a number of non-zero transform coefficients associated with the CB, shape of the CB, or a number of non-zero coefficients.

**3.** The video decoding device of claim 1 or claim 2, wherein the processor is further configured to:

apply the identified transform kernel to a first set of coefficients associated with the CB to generate a second set of coefficients; and
wherein the processor being configured to decode the CB comprises the processor being configured to decode the CB using the generated second set of coefficients.

**4.** The video decoding device of claim 3, wherein the first set of coefficients is a set of dequantized coefficients or a first set of reconstructed coefficients, wherein the second set of coefficients is a second set of reconstructed coefficients, wherein the first set of reconstructed coefficients is a set of inverse-secondary transformed dequantized coefficients.

**5.** The video decoding device of claim 3, wherein the second set of coefficients is generated using at least one of: the transform indices identifying the transform kernel, the available information, or the transform syntax elements.

**6.** The video decoding device of any of claims 1 through 5, wherein the CB is a luma CB or a chroma CB, and wherein the transform indices and the received one or more transform syntax elements are associated with a low frequency non-separable transform, LFNST, or a non-separable primary transform, NSPT.

**7.** The video decoding device of any of claims 1 through 6, wherein the received one or more transform syntax elements indicate that a prediction mode is selected to predict the CB, and the processor being configured to predict the CB further comprises the processor being configured to predict the CB using the prediction mode.

**8.** The video decoding device of claim 7, wherein the prediction mode is a template matching prediction, TMP, mode, an extrapolation-based intra prediction, EIP, mode, or a neural network-based intra prediction mode, and
based on a determination that the prediction mode is the EIP mode, received transform syntax elements indicates using a first intra prediction mode and a second intra prediction mode to predict the CB.

**9.** A video decoding method comprising:

obtaining available information associated with a coding block, CB;
receiving one or more transform syntax elements associated with the CB;
deriving mapping information based on at least one of the received one or more transform syntax elements associated with the CB;
converting the available information into transform indices using the mapping information;
identifying a transform kernel from a set of transform kernels using the transform indices; and
decoding the CB using the identified transform kernel.

**10.** The method of claim 9, wherein the set of kernels comprises multiple sets of kernels or one or more hierarchical sets of kernels, and wherein the available information associated with the CB comprises at least one of: an index of an intra prediction mode selected to predict the CB, a number of non-zero transform coefficients associated with the CB, shape of the CB, or a number of non-zero coefficients.

**11.** The method of claim 9 or claim 10, further comprising to:
applying the identified transform kernel to a first set of coefficients associated with the CB to generate a second set of coefficients; and
decoding the CB using the generated second set of coefficients.

**12.** The method of any of claim 11, wherein the first set of coefficients is a set of inverse-secondary transformed dequantized coefficients or a first set of reconstructed coefficients, and wherein the second set of coefficients is a set of reconstructed coefficients, and the second set of coefficients that is generated using at least one of: the transform indices identifying the transform kernel, the available information, or the transform syntax elements.

**13.** The method of any of claims 9 through 12, wherein the CB is a luma CB or a chroma CB, and wherein the transform indices and the received one or more transform syntax elements are associated with a low frequency non-separable transform, LFNST, or a non-separable primary transform, NSPT.

**14.** The method of any of claims 9 through 13, wherein the received one or more transform syntax elements indicate that a prediction mode is selected to predict the CB, and predicting the CB using the prediction mode, wherein the prediction mode is a template matching prediction, TMP, mode, an extrapolation-based intra prediction, EIP, mode, or a neural network-based intra prediction mode.

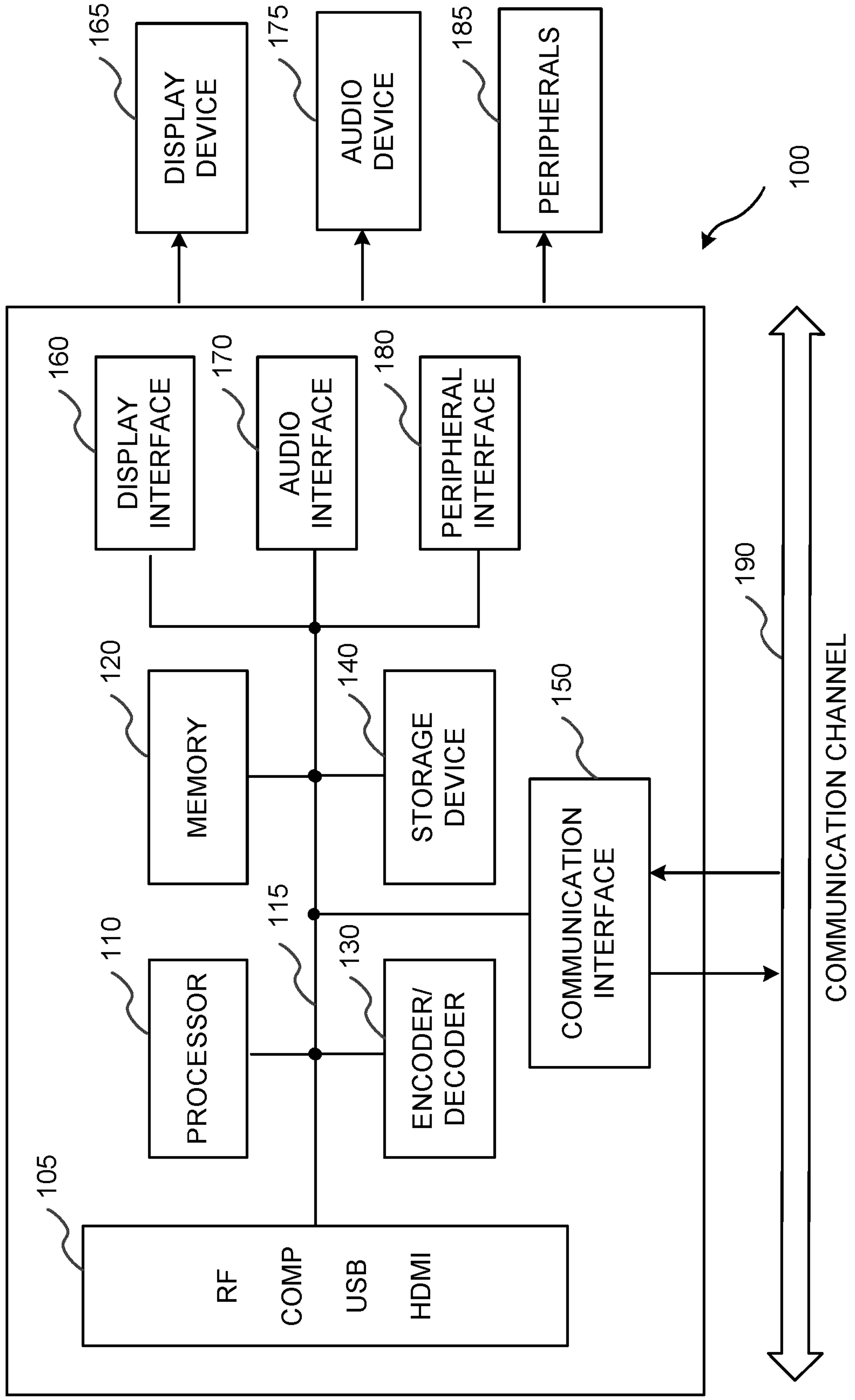
100
105
RF
COMP
USB
HDMI
110
PROCESSOR
115
120
MEMORY
130
ENCODER/
DECODER
140
STORAGE
DEVICE
150
COMMUNICATION
INTERFACE
160
DISPLAY
INTERFACE
170
AUDIO
INTERFACE
180
PERIPHERAL
INTERFACE
165
DISPLAY
DEVICE
175
AUDIO
DEVICE
185
PERIPHERALS
190
COMMUNICATION CHANNEL

FIG. 1

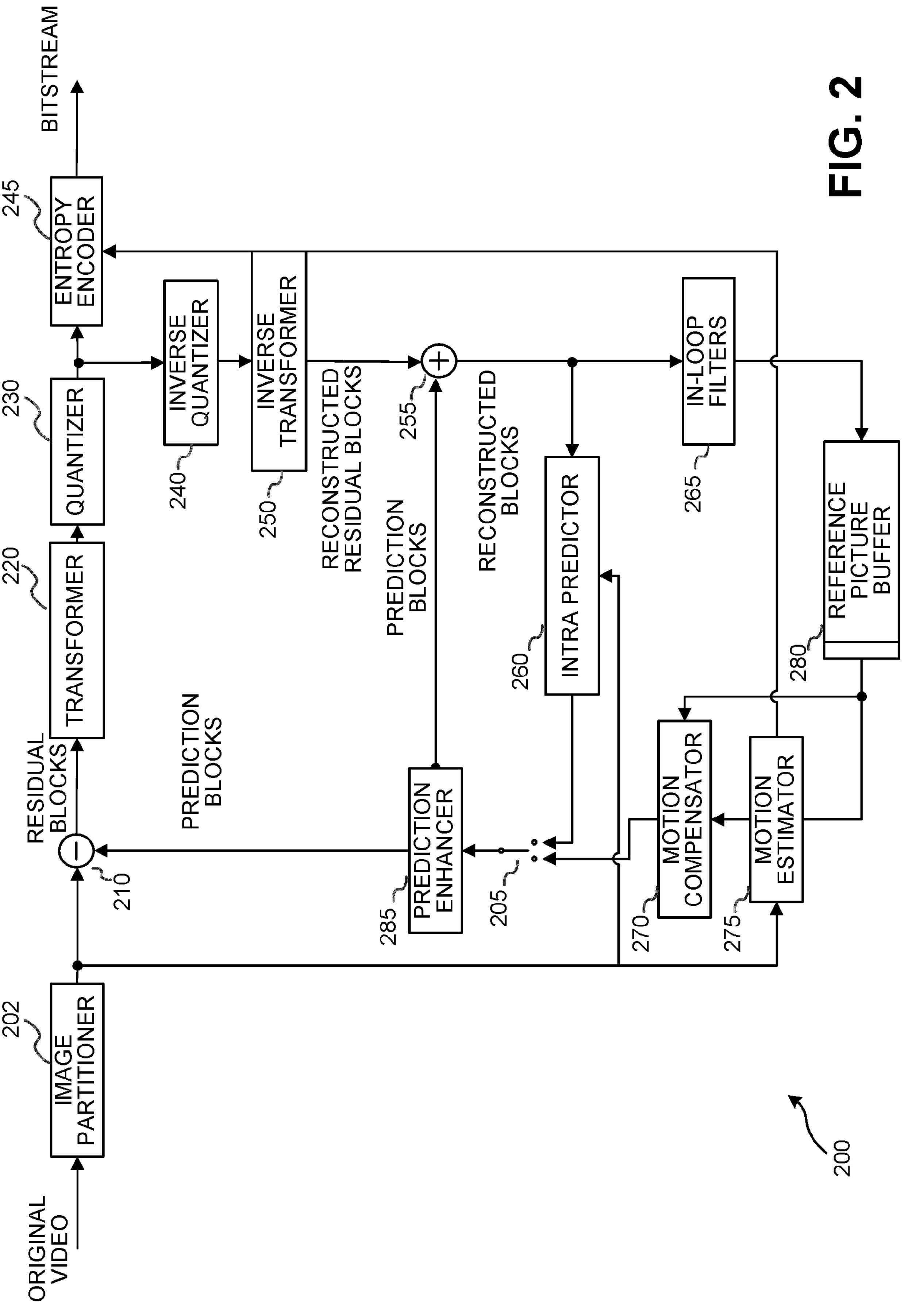
ORIGINAL VIDEO
IMAGE PARTITIONER
202
RESIDUAL BLOCKS
210
TRANSFORMER
220
QUANTIZER
230
ENTROPY ENCODER
245
BITSTREAM
INVERSE QUANTIZER
240
INVERSE TRANSFORMER
250
RECONSTRUCTED RESIDUAL BLOCKS
255
PREDICTION BLOCKS
PREDICTION BLOCKS
RECONSTRUCTED BLOCKS
IN-LOOP FILTERS
265
INTRA PREDICTOR
260
REFERENCE PICTURE BUFFER
280
PREDICTION ENHANCER
285
205
MOTION COMPENSATOR
270
MOTION ESTIMATOR
275
200

FIG. 2

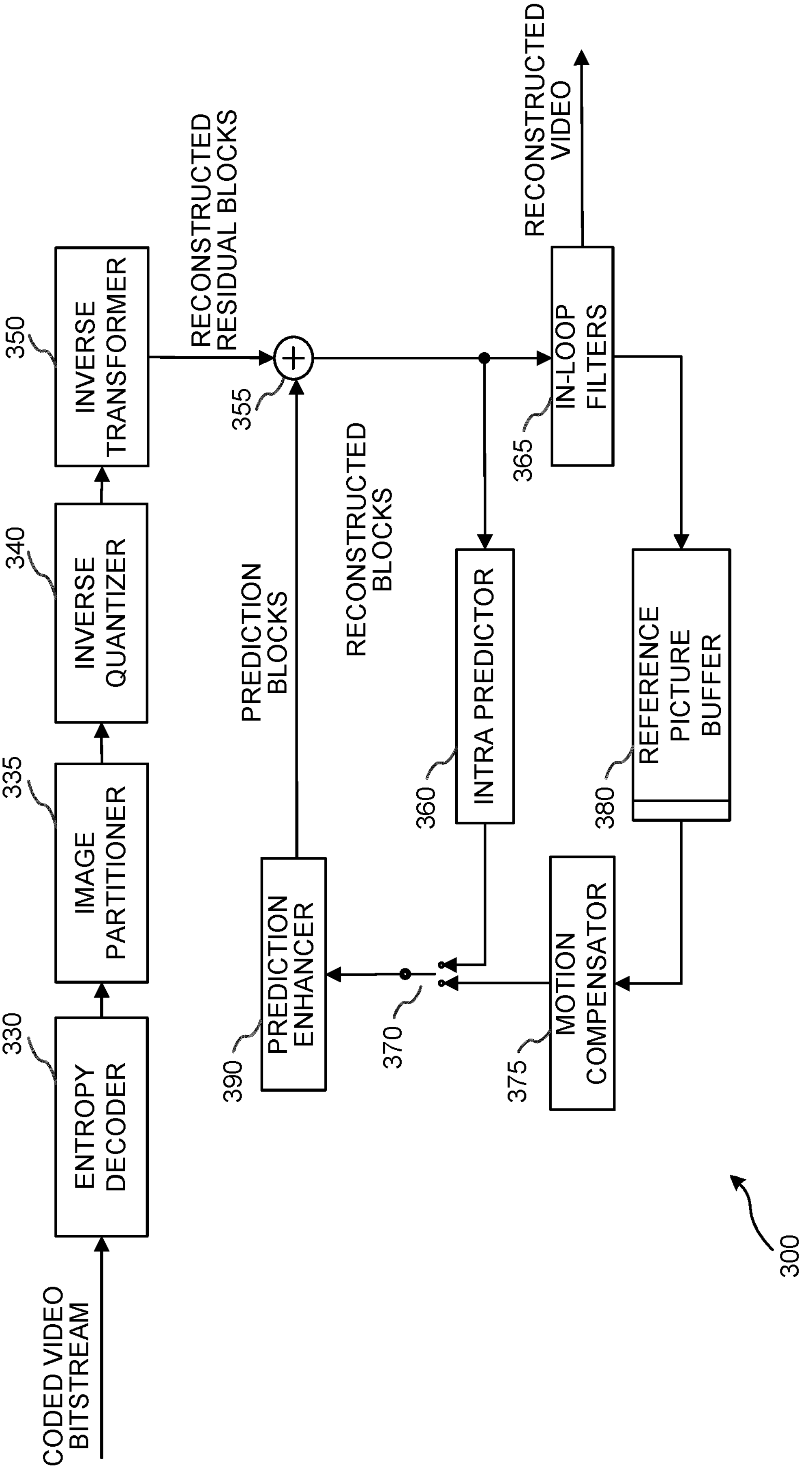
CODED VIDEO BITSTREAM
ENTROPY DECODER
330
IMAGE PARTITIONER
335
INVERSE QUANTIZER
340
INVERSE TRANSFORMER
350
RECONSTRUCTED RESIDUAL BLOCKS
355
PREDICTION BLOCKS
RECONSTRUCTED BLOCKS
PREDICTION ENHANCER
390
370
INTRA PREDICTOR
360
IN-LOOP FILTERS
365
RECONSTRUCTED VIDEO
MOTION COMPENSATOR
375
REFERENCE PICTURE BUFFER
380
300

FIG. 3

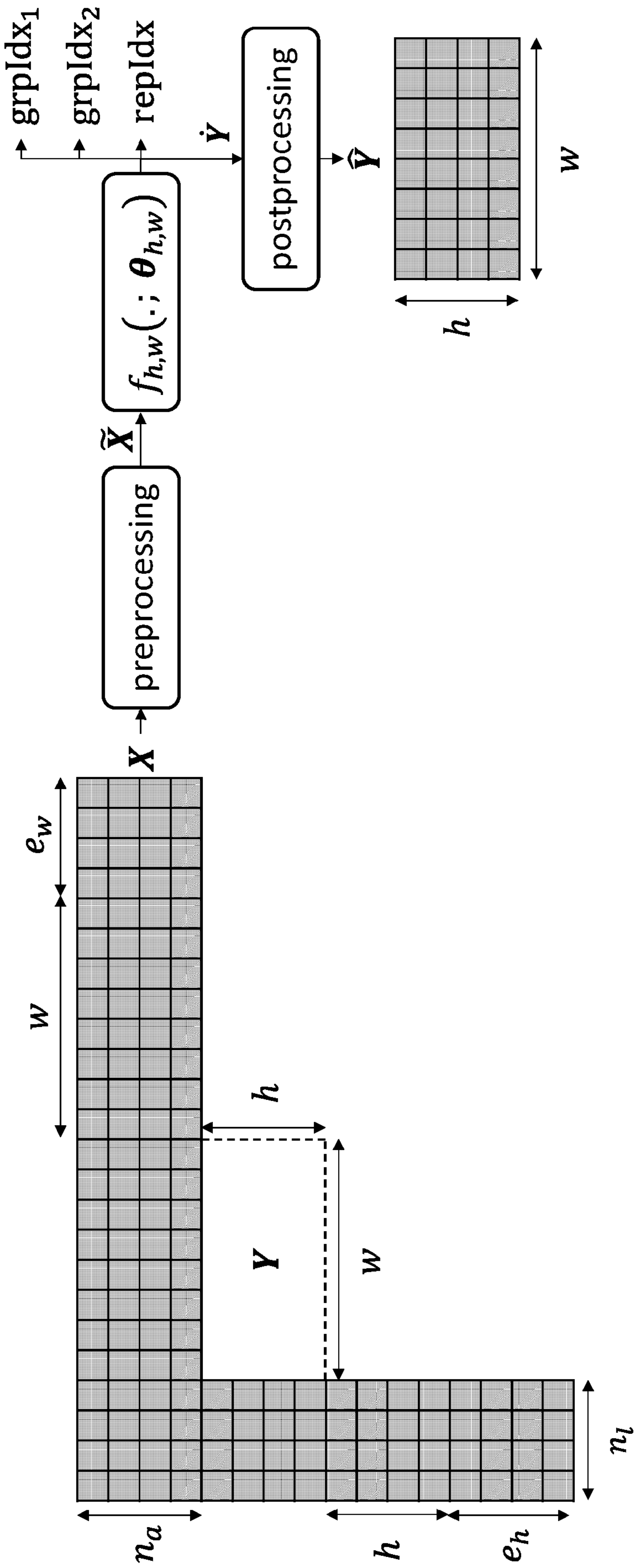
grpIdx$_1$
grpIdx$_2$
repIdx
$\dot{Y}$
postprocessing
$\hat{Y}$
$w$
$h$
$f_{h,w}(\cdot;\theta_{h,w})$
$\tilde{X}$
preprocessing
$X$
$e_w$
$w$
$h$
$Y$
$w$
$n_l$
$n_a$
$h$
$e_h$

FIG. 4

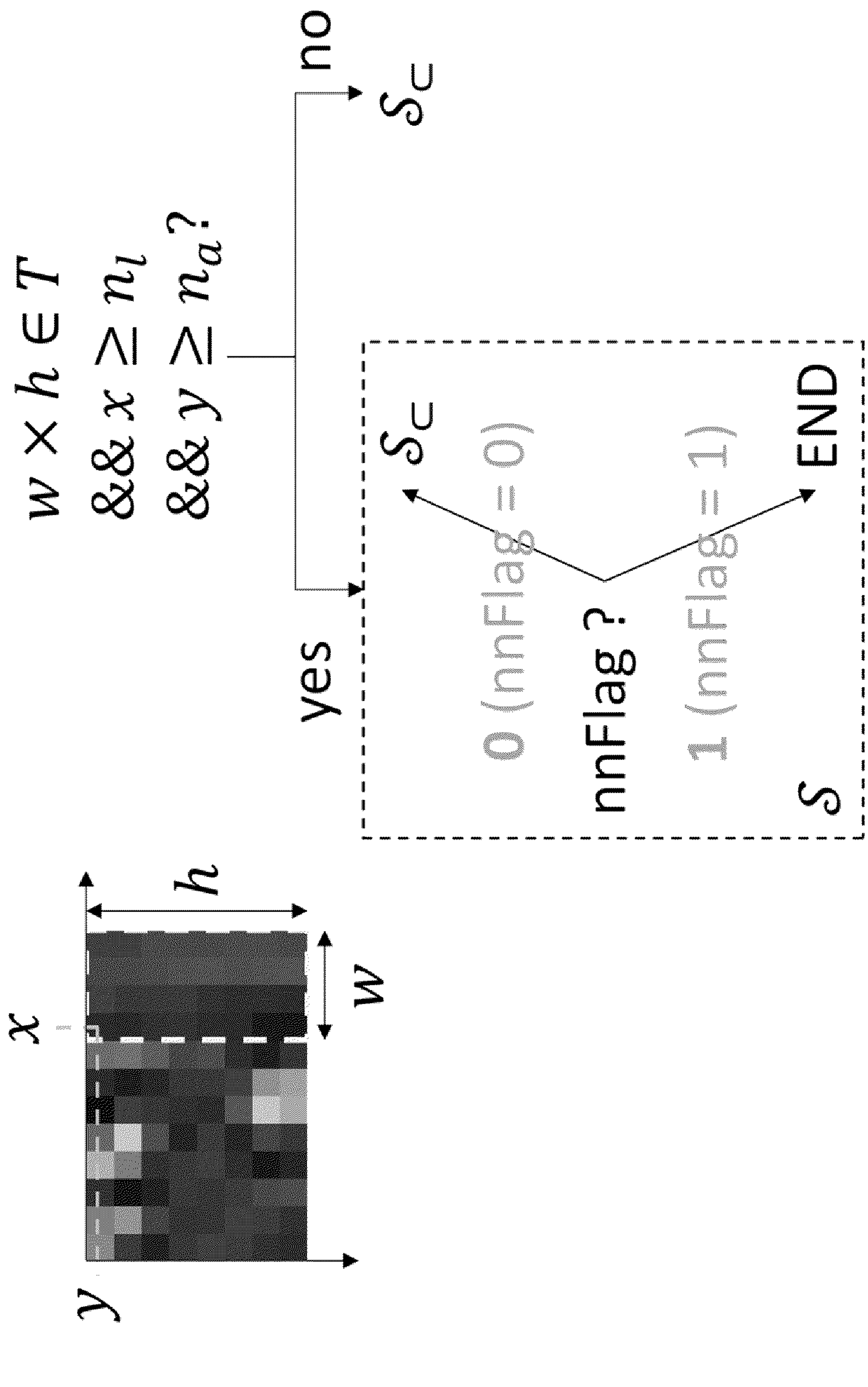
x
y
h
w
$w \times h \in T$
$\&\& \; x \geq n_l$
$\&\& \; y \geq n_a?$
no
yes
$\mathcal{S}_{\subset}$
nnFlag ?
0 (nnFlag = 0)
1 (nnFlag = 1)
$\mathcal{S}_{\subset}$
END
$\mathcal{S}$

FIG. 5

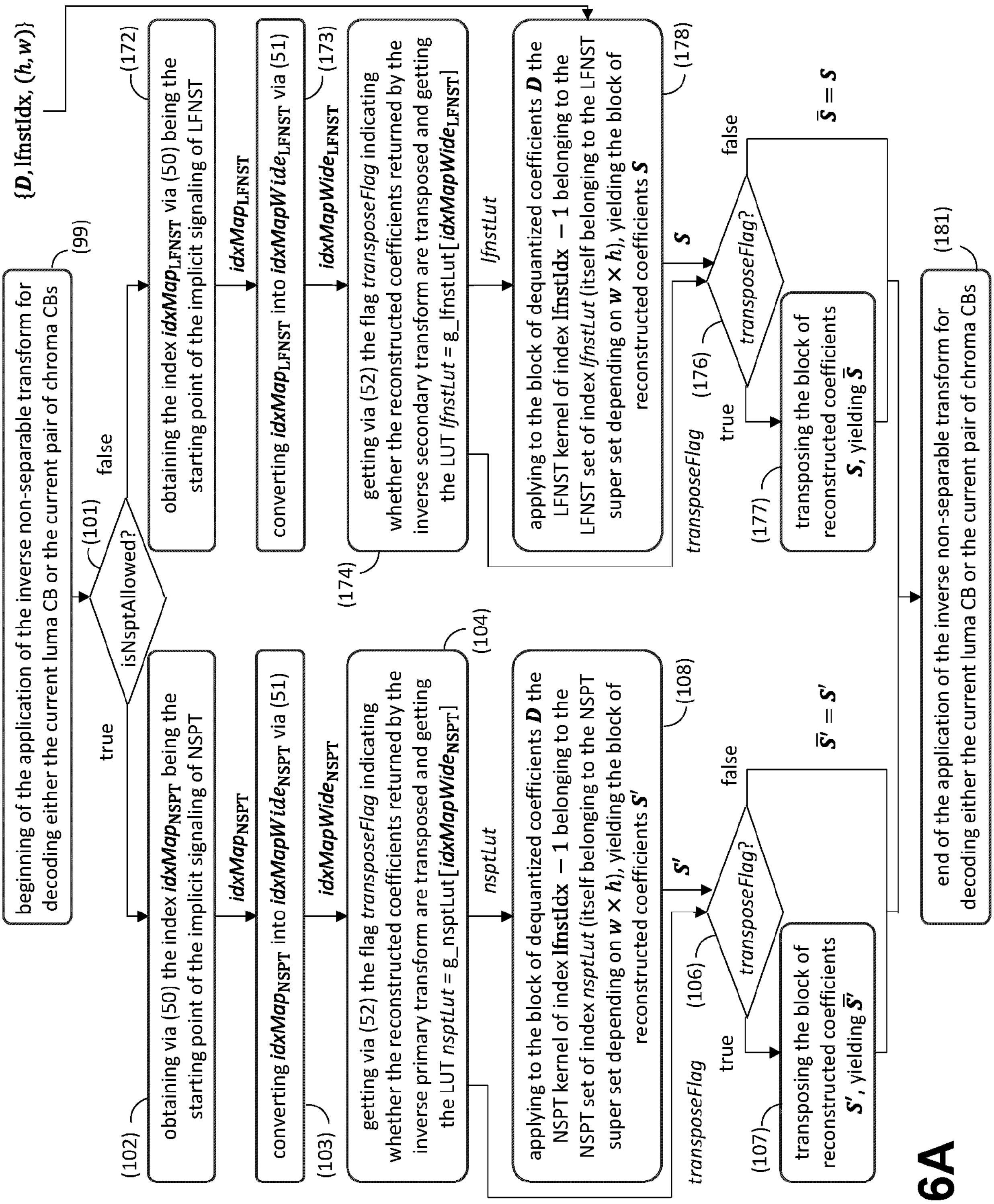
beginning of the application of the inverse non-separable transform for decoding either the current luma CB or the current pair of chroma CBs
(99)
{D, lfnstIdx, (h, w)}
isNsptAllowed?
(101)
true
false
obtaining via (50) the index idxMapNSPT being the starting point of the implicit signaling of NSPT
(102)
idxMapNSPT
converting idxMapNSPT into idxMapWideNSPT via (51)
(103)
idxMapWideNSPT
getting via (52) the flag transposeFlag indicating whether the reconstructed coefficients returned by the inverse primary transform are transposed and getting the LUT nsptLut = g_nsptLut[idxMapWideNSPT]
(104)
nsptLut
applying to the block of dequantized coefficients D the NSPT kernel of index lfnstIdx − 1 belonging to the NSPT set of index nsptLut (itself belonging to the NSPT super set depending on w × h), yielding the block of reconstructed coefficients S'
(108)
S'
transposeFlag
transposeFlag?
(106)
true
false
transposing the block of reconstructed coefficients S', yielding S̄'
(107)
S̄' = S'
obtaining the index idxMapLFNST via (50) being the starting point of the implicit signaling of LFNST
(172)
idxMapLFNST
converting idxMapLFNST into idxMapWideLFNST via (51)
(173)
idxMapWideLFNST
getting via (52) the flag transposeFlag indicating whether the reconstructed coefficients returned by the inverse secondary transform are transposed and getting the LUT lfnstLut = g_lfnstLut[idxMapWideLFNST]
(174)
lfnstLut
applying to the block of dequantized coefficients D the LFNST kernel of index lfnstIdx − 1 belonging to the LFNST set of index lfnstLut (itself belonging to the LFNST super set depending on w × h), yielding the block of reconstructed coefficients S
(178)
S
transposeFlag
transposeFlag?
(176)
true
false
transposing the block of reconstructed coefficients S, yielding S̄
(177)
S̄ = S
end of the application of the inverse non-separable transform for decoding either the current luma CB or the current pair of chroma CBs
(181)

FIG. 6A

(50)

| intra/inter | syntax element of the prediction mode | ***idxMap***$_{\mathrm{i}}$<br>$i \in \{\mathrm{NSPT}, \mathrm{LFNST}\}$ |
|---|---|---|
| intra | *mipFlag* being true | mipDimdMode |
| | *sgpmFlag* being true | splitDir |
| | *tmpFlag* being true | intraTmpDimdMode |
| | *timd* being true | MAP131TO67(idxIntra) |
| | *tmrlFlag* being true | MAP131TO67(idxIntra) |
| | plIdx == 1 | VER_IDX |
| | plIdx == 2 | HOR_IDX |
| | *eipFlag* being true | eipDimdMode |
| | Any other flag being true | idxIntra |
| inter | *geoFlag* being true | dimdDerivedIntraDir2nd if *lfnstIntra* is true, dimdDerivedIntraDir otherwise |
| | Any other flag being true | dimdDerivedIntraDir |

**FIG. 6B**

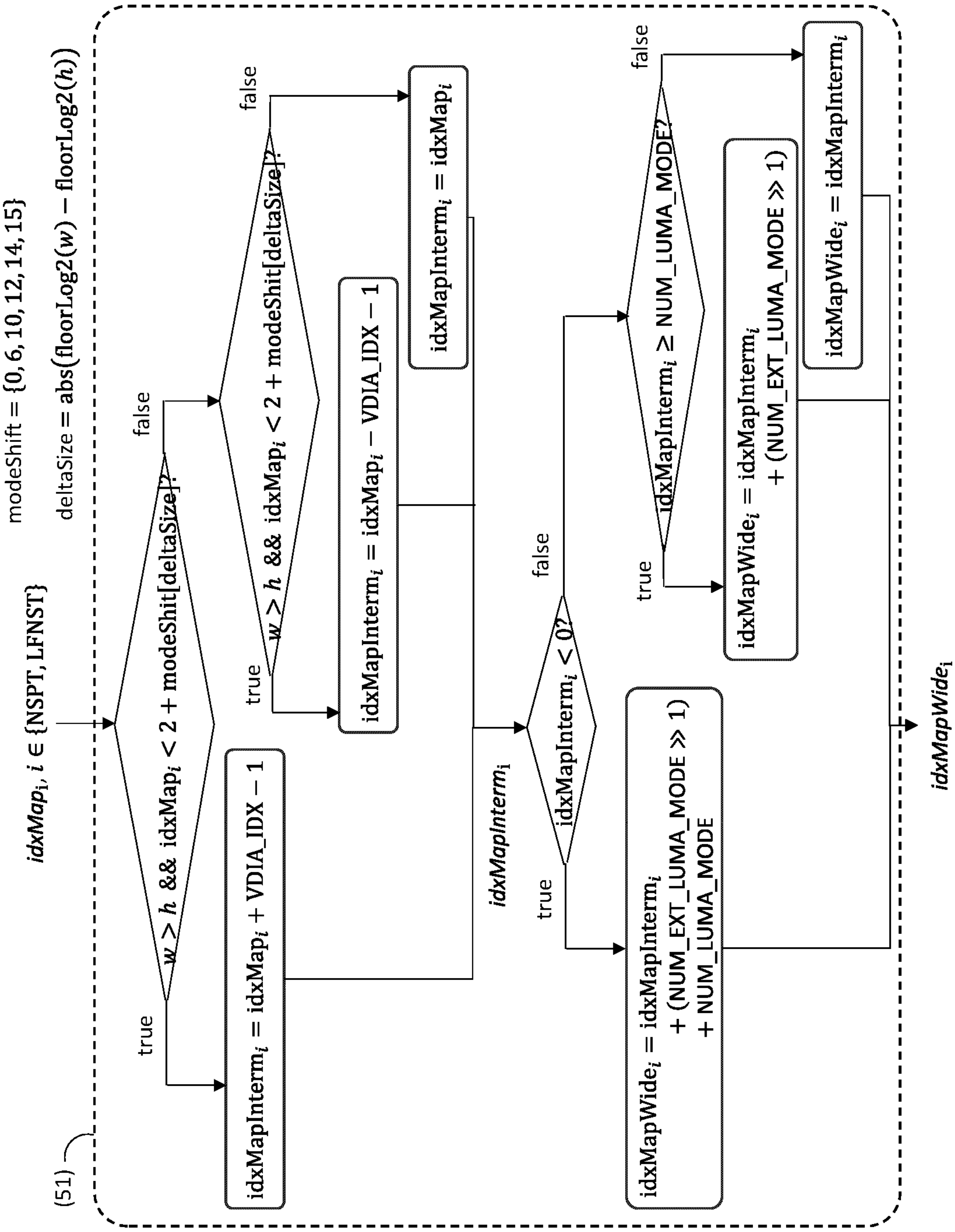
(51)
idxMap_i, i ∈ {NSPT, LFNST}
modeShift = {0, 6, 10, 12, 14, 15}
deltaSize = abs(floorLog2(w) − floorLog2(h))
w > h && idxMap_i < 2 + modeShit[deltaSize]?
true
false
idxMapInterm_i = idxMap_i + VDIA_IDX − 1
w > h && idxMap_i < 2 + modeShit[deltaSize]?
idxMapInterm_i = idxMap_i − VDIA_IDX − 1
idxMapInterm_i = idxMap_i
idxMapInterm_i
idxMapInterm_i < 0?
idxMapWide_i = idxMapInterm_i + (NUM_EXT_LUMA_MODE ≫ 1) + NUM_LUMA_MODE
idxMapInterm_i ≥ NUM_LUMA_MODE?
idxMapWide_i = idxMapInterm_i + (NUM_EXT_LUMA_MODE ≫ 1)
idxMapWide_i = idxMapInterm_i
idxMapWide_i

FIG. 6C

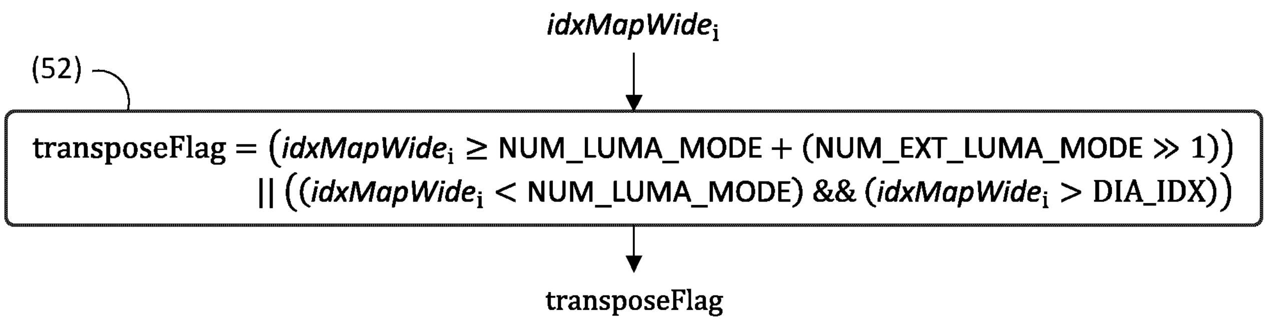
idxMapWide_i
(52)
transposeFlag = (idxMapWide_i ≥ NUM_LUMA_MODE + (NUM_EXT_LUMA_MODE ≫ 1))
|| ((idxMapWide_i < NUM_LUMA_MODE) && (idxMapWide_i > DIA_IDX))
transposeFlag

FIG. 6D

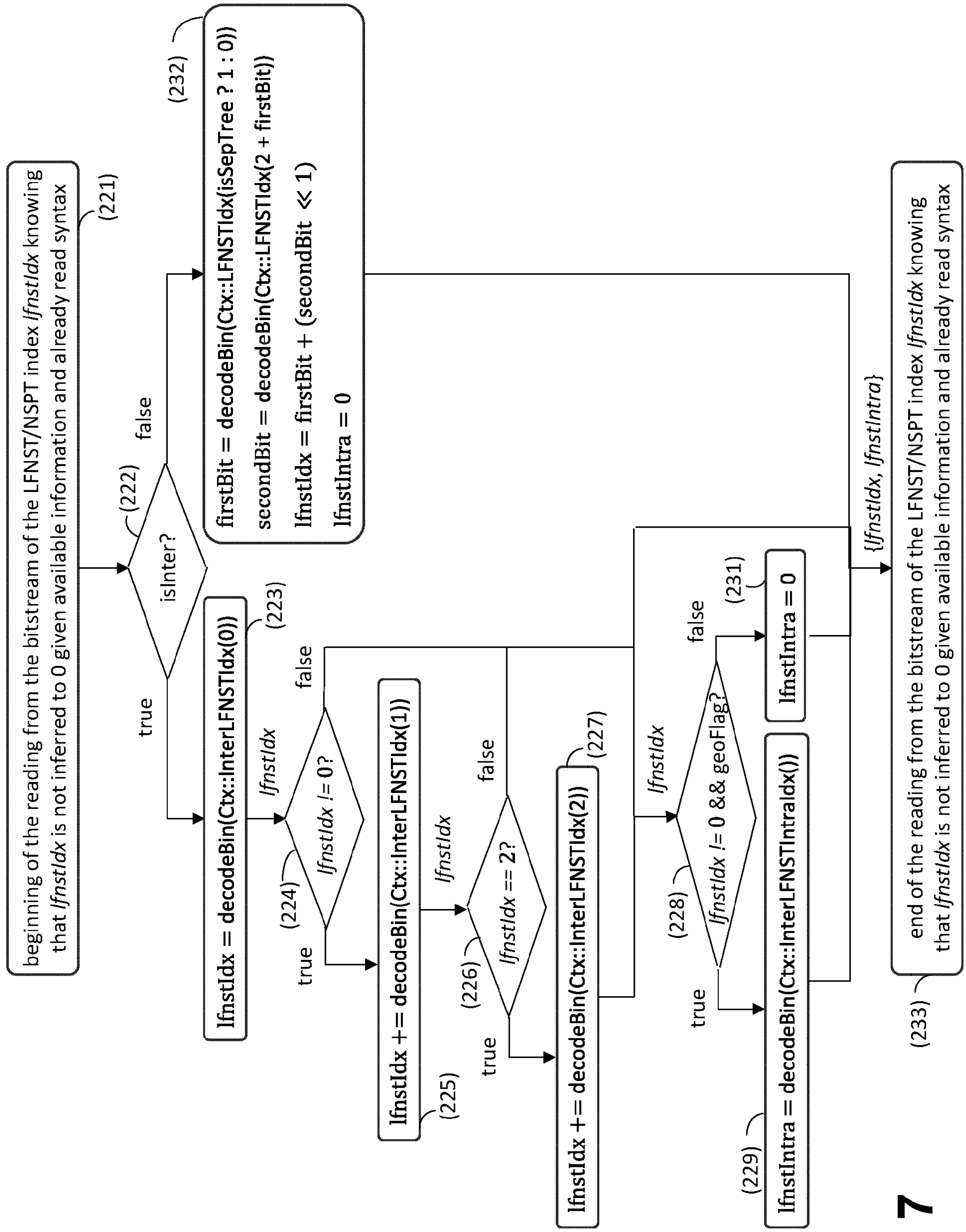
beginning of the reading from the bitstream of the LFNST/NSPT index lfnstIdx knowing that lfnstIdx is not inferred to 0 given available information and already read syntax
(221)
isInter?
(222)
true
false
lfnstIdx = decodeBin(Ctx::InterLFNSTIdx(0))
(223)
firstBit = decodeBin(Ctx::LFNSTIdx(isSepTree ? 1 : 0))
secondBit = decodeBin(Ctx::LFNSTIdx(2 + firstBit))
lfnstIdx = firstBit + (secondBit ≪ 1)
lfnstIntra = 0
(232)
lfnstIdx
lfnstIdx != 0?
(224)
true
false
lfnstIdx += decodeBin(Ctx::InterLFNSTIdx(1))
(225)
lfnstIdx
lfnstIdx == 2?
(226)
true
false
lfnstIdx += decodeBin(Ctx::InterLFNSTIdx(2))
(227)
lfnstIdx
lfnstIdx != 0 && geoFlag?
(228)
true
false
lfnstIntra = decodeBin(Ctx::InterLFNSTIntraIdx())
(229)
lfnstIntra = 0
(231)
{lfnstIdx, lfnstIntra}
end of the reading from the bitstream of the LFNST/NSPT index lfnstIdx knowing that lfnstIdx is not inferred to 0 given available information and already read syntax
(233)

FIG. 7

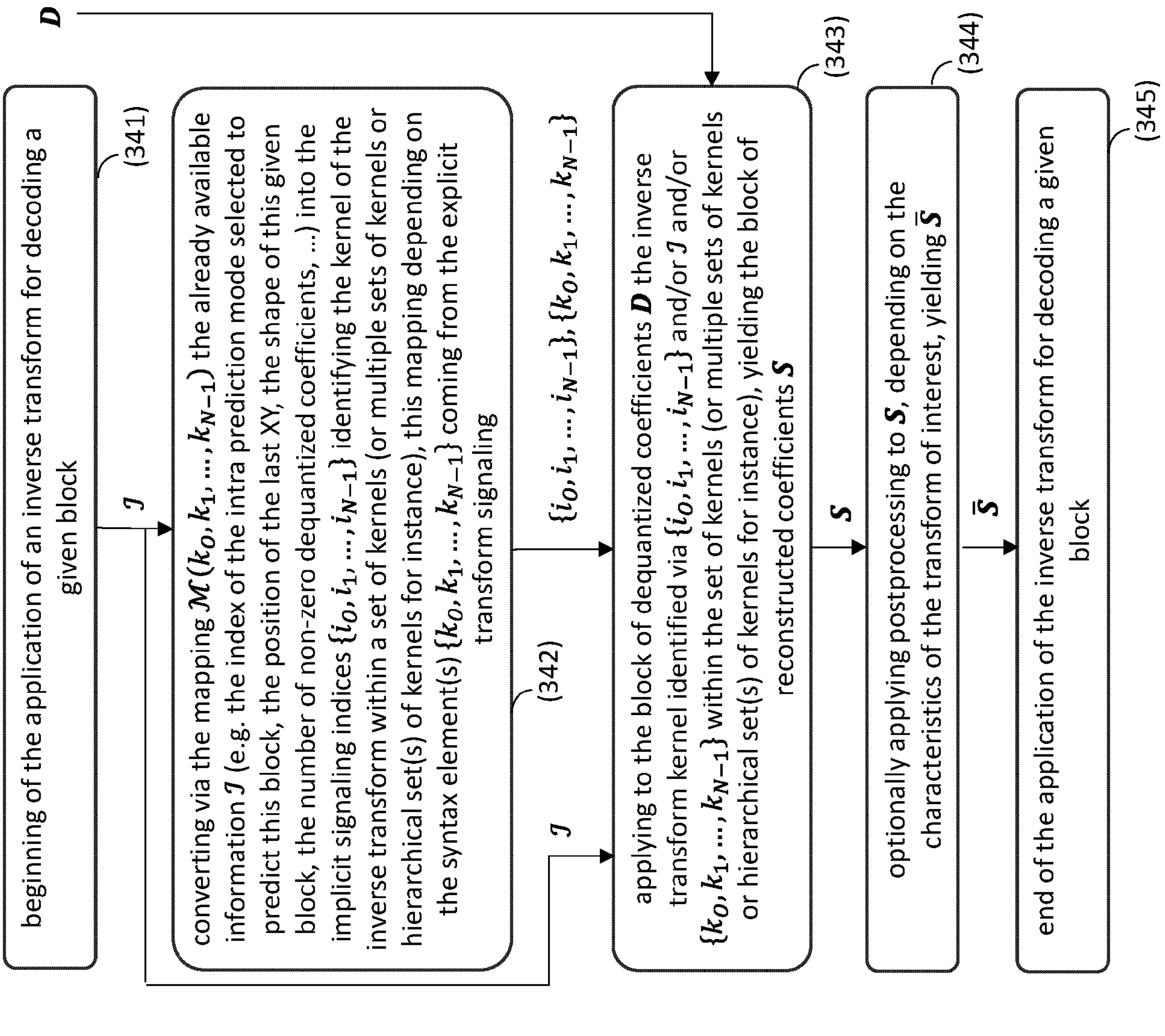
beginning of the application of an inverse transform for decoding a given block
(341)
$\mathcal{I}$
converting via the mapping $\mathcal{M}(k_0, k_1, \ldots, k_{N-1})$ the already available information $\mathcal{I}$ (e.g. the index of the intra prediction mode selected to predict this block, the position of the last XY, the shape of this given block, the number of non-zero dequantized coefficients, ...) into the implicit signaling indices $\{i_0, i_1, \ldots, i_{N-1}\}$ identifying the kernel of the inverse transform within a set of kernels (or multiple sets of kernels or hierarchical set(s) of kernels for instance), this mapping depending on the syntax element(s) $\{k_0, k_1, \ldots, k_{N-1}\}$ coming from the explicit transform signaling
(342)
$\{i_0, i_1, \ldots, i_{N-1}\}, \{k_0, k_1, \ldots, k_{N-1}\}$
$\mathcal{I}$
$\boldsymbol{D}$
applying to the block of dequantized coefficients $\boldsymbol{D}$ the inverse transform kernel identified via $\{i_0, i_1, \ldots, i_{N-1}\}$ and/or $\mathcal{I}$ and/or $\{k_0, k_1, \ldots, k_{N-1}\}$ within the set of kernels (or multiple sets of kernels or hierarchical set(s) of kernels for instance), yielding the block of reconstructed coefficients $\boldsymbol{S}$
(343)
$\boldsymbol{S}$
optionally applying postprocessing to $\boldsymbol{S}$, depending on the characteristics of the transform of interest, yielding $\bar{\boldsymbol{S}}$
(344)
$\bar{\boldsymbol{S}}$
end of the application of the inverse transform for decoding a given block
(345)

FIG. 8

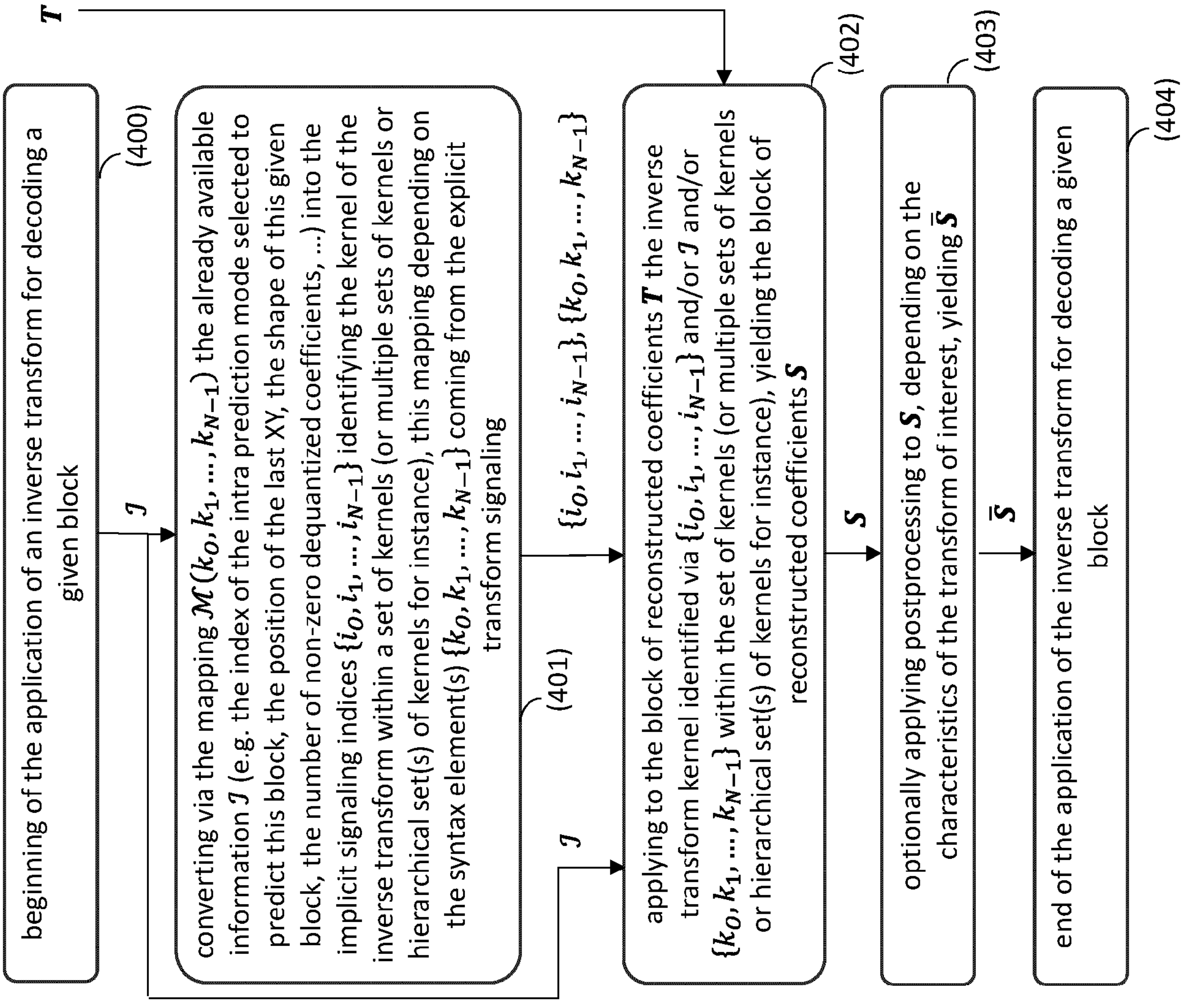
T
beginning of the application of an inverse transform for decoding a given block
(400)
$\mathcal{J}$
converting via the mapping $\mathcal{M}(k_O, k_1, \ldots, k_{N-1})$ the already available information $\mathcal{J}$ (e.g. the index of the intra prediction mode selected to predict this block, the position of the last XY, the shape of this given block, the number of non-zero dequantized coefficients, ...) into the implicit signaling indices $\{i_O, i_1, \ldots, i_{N-1}\}$ identifying the kernel of the inverse transform within a set of kernels (or multiple sets of kernels or hierarchical set(s) of kernels for instance), this mapping depending on the syntax element(s) $\{k_O, k_1, \ldots, k_{N-1}\}$ coming from the explicit transform signaling
(401)
$\{i_O, i_1, \ldots, i_{N-1}\}, \{k_O, k_1, \ldots, k_{N-1}\}$
$\mathcal{J}$
applying to the block of reconstructed coefficients $\boldsymbol{T}$ the inverse transform kernel identified via $\{i_O, i_1, \ldots, i_{N-1}\}$ and/or $\mathcal{J}$ and/or $\{k_O, k_1, \ldots, k_{N-1}\}$ within the set of kernels (or multiple sets of kernels or hierarchical set(s) of kernels for instance), yielding the block of reconstructed coefficients $\boldsymbol{S}$
(402)
$\boldsymbol{S}$
optionally applying postprocessing to $\boldsymbol{S}$, depending on the characteristics of the transform of interest, yielding $\bar{\boldsymbol{S}}$
(403)
$\bar{\boldsymbol{S}}$
end of the application of the inverse transform for decoding a given block
(404)

FIG. 9

| intra/inter | syntax element of the prediction mode | ***idxMap***$_{\mathrm{i}}$<br>$i \in \{\mathrm{NSPT}, \mathrm{LFNST}\}$ |
|---|---|---|
| intra | *mipFlag* being true | mipDimdMode |
| | *sgpmFlag* being true | splitDir |
| | *tmpFlag* being true | ***idxMap***$_{\mathrm{i}}$ = intraTmpDimdMode<br>if (lfnstIdx == a && lfnstSecFlag)<br>{<br>***idxMap***$_{\mathrm{i}}$ = PLANAR_IDX<br>} |
| | *timd* being true | MAP131TO67(idxIntra) |
| | *tmrlFlag* being true | MAP131TO67(idxIntra) |
| | plIdx == 1 | VER_IDX |
| | plIdx == 2 | HOR_IDX |
| | *eipFlag* being true | eipDimdMode |
| | Any other flag being true | idxIntra |
| inter | *geoFlag* being true | dimdDerivedIntraDir2nd if *lfnstIntra* is true, dimdDerivedIntraDir otherwise |
| | Any other flag being true | dimdDerivedIntraDir |

**FIG. 10**

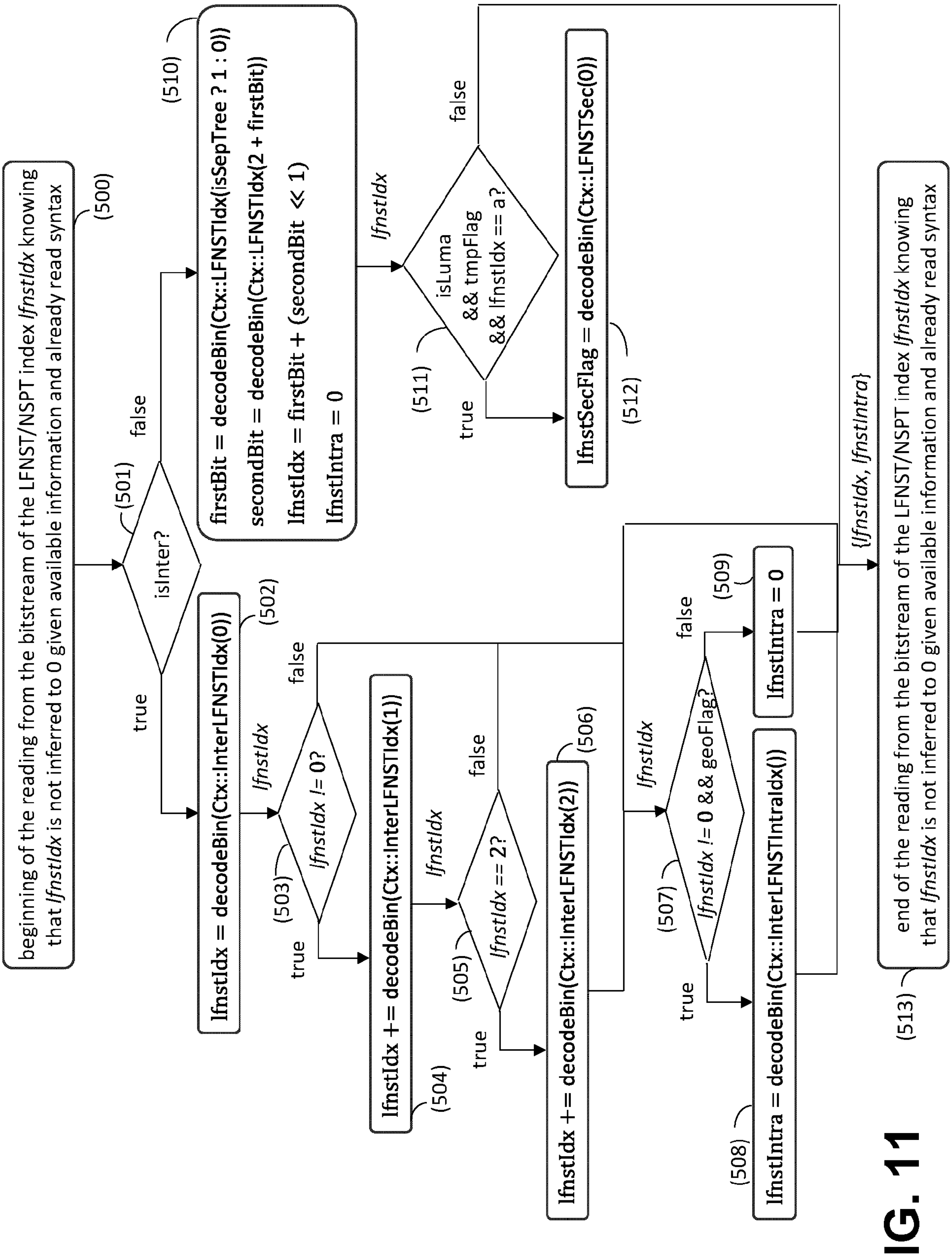
beginning of the reading from the bitstream of the LFNST/NSPT index lfnstIdx knowing that lfnstIdx is not inferred to 0 given available information and already read syntax
(500)
isInter?
(501)
true
false
lfnstIdx = decodeBin(Ctx::InterLFNSTIdx(0))
(502)
firstBit = decodeBin(Ctx::LFNSTIdx(isSepTree ? 1 : 0))
secondBit = decodeBin(Ctx::LFNSTIdx(2 + firstBit))
lfnstIdx = firstBit + (secondBit ≪ 1)
lfnstIntra = 0
(510)
lfnstIdx
isLuma && tmpFlag && lfnstIdx == a?
(511)
true
false
lfnstSecFlag = decodeBin(Ctx::LFNSTSec(0))
(512)
lfnstIdx
lfnstIdx != 0?
(503)
true
false
lfnstIdx += decodeBin(Ctx::InterLFNSTIdx(1))
(504)
lfnstIdx
lfnstIdx == 2?
(505)
true
false
lfnstIdx += decodeBin(Ctx::InterLFNSTIdx(2))
(506)
lfnstIdx
lfnstIdx != 0 && geoFlag?
(507)
true
false
lfnstIntra = decodeBin(Ctx::InterLFNSTIntraIdx())
(508)
lfnstIntra = 0
(509)
{lfnstIdx, lfnstIntra}
end of the reading from the bitstream of the LFNST/NSPT index lfnstIdx knowing that lfnstIdx is not inferred to 0 given available information and already read syntax
(513)

FIG. 11

<table>
<tr><th>intra/inter</th><th>syntax element of the prediction mode</th><th>idxMap$_i$<br>$i \in \{NSPT, LFNST\}$</th></tr>
<tr><td>intra</td><td>mipFlag being true</td><td>mipDimdMode</td></tr>
<tr><td></td><td>sgpmFlag being true</td><td>splitDir</td></tr>
<tr><td></td><td>tmpFlag being true</td><td>idxMap$_i$ = intraTmpDimdMode<br>if ((lfnstIdx == a || lfnstIdx == b) && lfnstSecFlag)<br>{<br>   idxMap$_i$ = PLANAR_IDX<br>}</td></tr>
<tr><td></td><td>timd being true</td><td>MAP131TO67(idxIntra)</td></tr>
<tr><td></td><td>tmrlFlag being true</td><td>MAP131TO67(idxIntra)</td></tr>
<tr><td></td><td>plIdx == 1</td><td>VER_IDX</td></tr>
<tr><td></td><td>plIdx == 2</td><td>HOR_IDX</td></tr>
<tr><td></td><td>eipFlag being true</td><td>eipDimdMode</td></tr>
<tr><td></td><td>Any other flag being true</td><td>idxIntra</td></tr>
<tr><td>inter</td><td>geoFlag being true</td><td>dimdDerivedIntraDir2nd if lfnstIntra is true,<br>dimdDerivedIntraDir otherwise</td></tr>
<tr><td></td><td>Any other flag being true</td><td>dimdDerivedIntraDir</td></tr>
</table>

**FIG. 12**

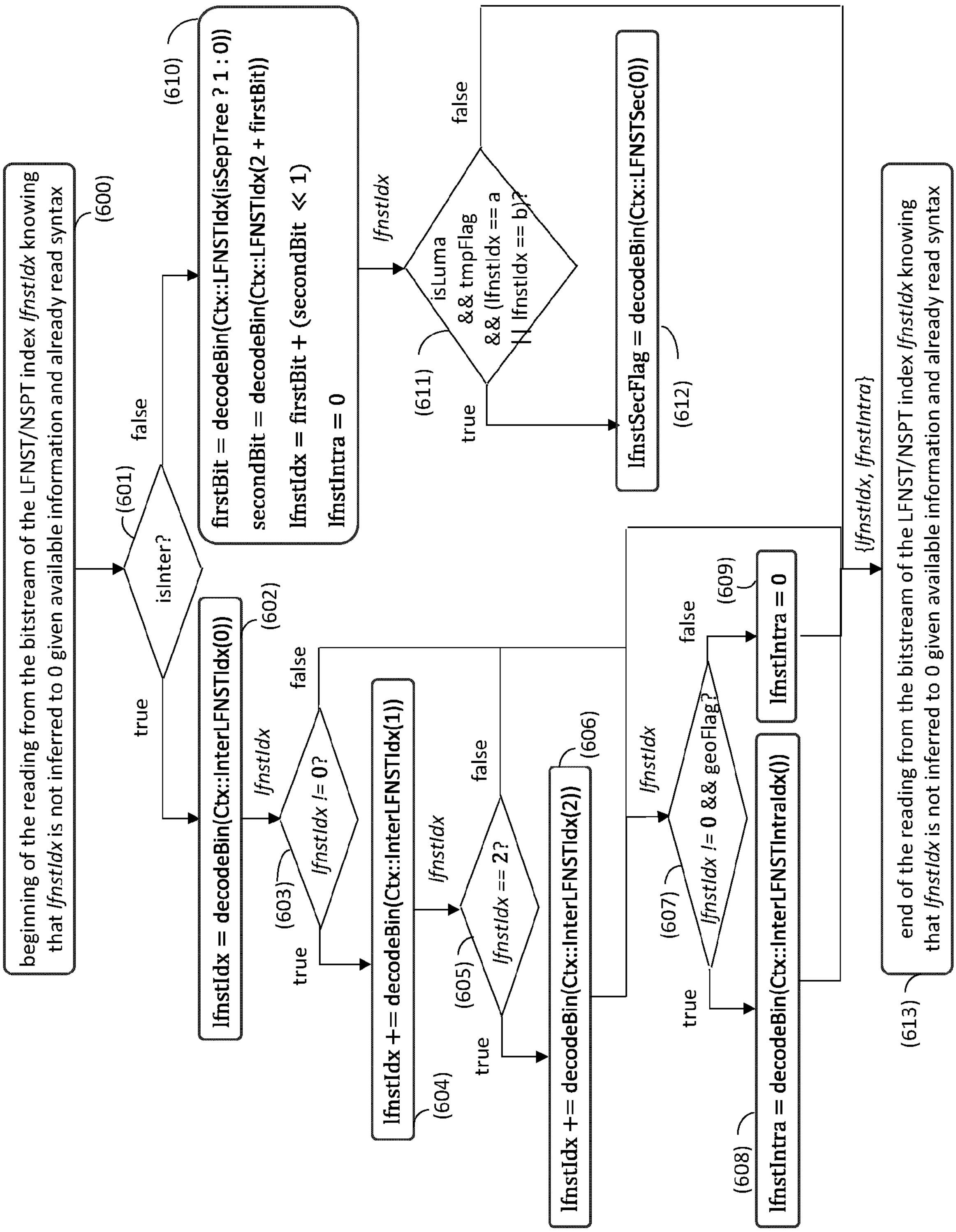
beginning of the reading from the bitstream of the LFNST/NSPT index lfnstIdx knowing that lfnstIdx is not inferred to 0 given available information and already read syntax
(600)
isInter?
(601)
true
false
lfnstIdx = decodeBin(Ctx::InterLFNSTIdx(0))
(602)
firstBit = decodeBin(Ctx::LFNSTIdx(isSepTree ? 1 : 0))
secondBit = decodeBin(Ctx::LFNSTIdx(2 + firstBit))
lfnstIdx = firstBit + (secondBit ≪ 1)
lfnstIntra = 0
(610)
lfnstIdx
lfnstIdx != 0?
(603)
true
false
lfnstIdx += decodeBin(Ctx::InterLFNSTIdx(1))
(604)
lfnstIdx
lfnstIdx == 2?
(605)
true
false
lfnstIdx += decodeBin(Ctx::InterLFNSTIdx(2))
(606)
lfnstIdx
lfnstIdx != 0 && geoFlag?
(607)
true
false
lfnstIntra = decodeBin(Ctx::InterLFNSTIntraIdx())
(608)
lfnstIntra = 0
(609)
lfnstIdx
isLuma
&& tmpFlag
&& (lfnstIdx == a
|| lfnstIdx == b)?
(611)
true
false
lfnstSecFlag = decodeBin(Ctx::LFNSTSec(0))
(612)
{lfnstIdx, lfnstIntra}
end of the reading from the bitstream of the LFNST/NSPT index lfnstIdx knowing that lfnstIdx is not inferred to 0 given available information and already read syntax
(613)

FIG. 13

| intra/inter | syntax element of the prediction mode | $\boldsymbol{idxMap}_i$<br>$i \in \{NSPT, LFNST\}$ |
|---|---|---|
| intra | *mipFlag* being true | mipDimdMode |
| | *sgpmFlag* being true | splitDir |
| | *tmpFlag* being true | intraTmpDimdMode |
| | *timd* being true | MAP131TO67(idxIntra) |
| | *tmrlFlag* being true | MAP131TO67(idxIntra) |
| | plIdx == 1 | VER_IDX |
| | plIdx == 2 | HOR_IDX |
| | *eipFlag* being true | $\boldsymbol{idxMap}_i$ = eipDimdMode<br>if (lfnstIdx != c && lfnstSecFlag)<br>{<br>$\boldsymbol{idxMap}_i$ = eipDimdMode2nd<br>} |
| | Any other flag being true | idxIntra |
| inter | *geoFlag* being true | dimdDerivedIntraDir2nd if *lfnstIntra* is true, dimdDerivedIntraDir otherwise |
| | Any other flag being true | dimdDerivedIntraDir |

**FIG. 14**

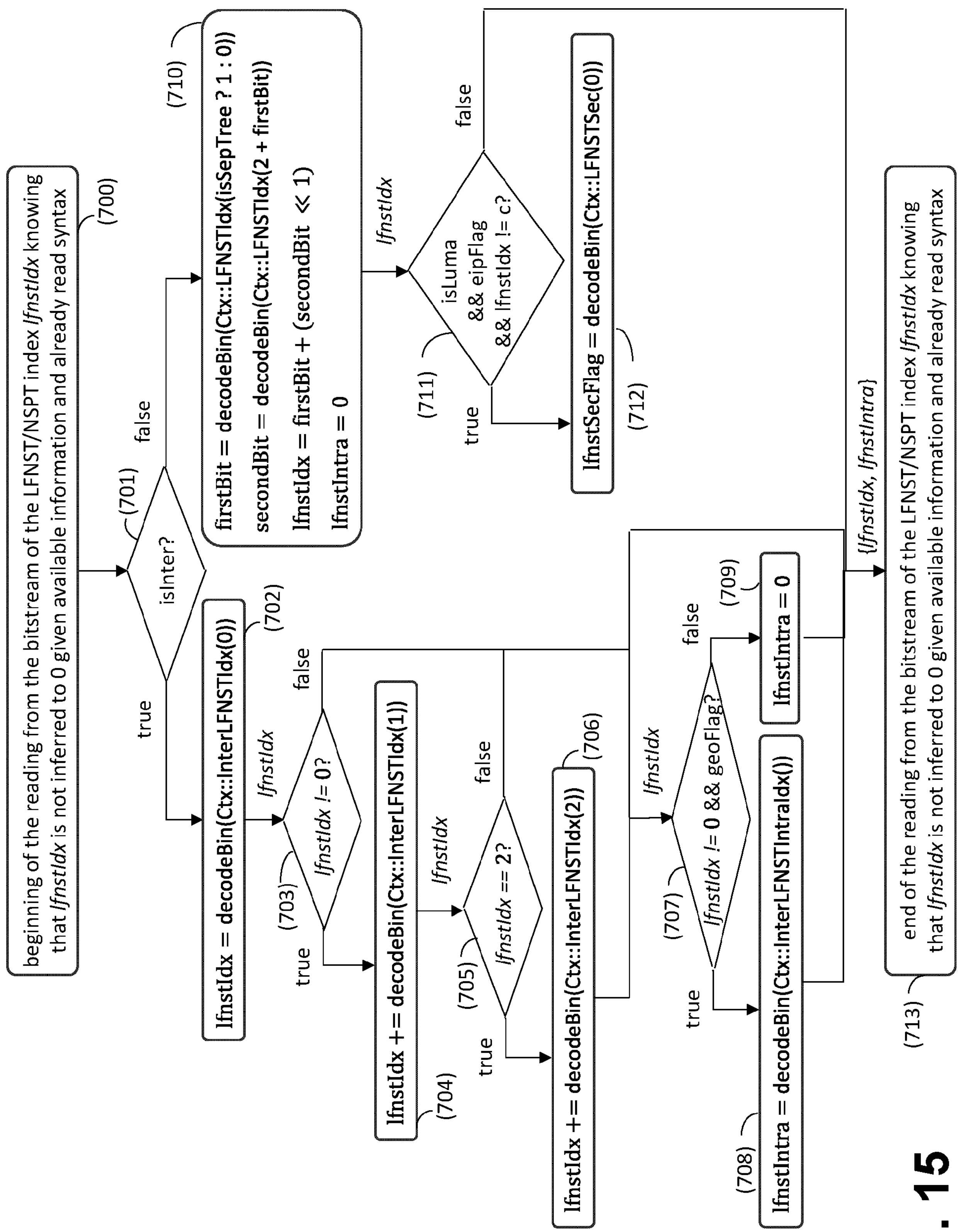
beginning of the reading from the bitstream of the LFNST/NSPT index lfnstIdx knowing that lfnstIdx is not inferred to 0 given available information and already read syntax
(700)
isInter?
(701)
true
false
lfnstIdx = decodeBin(Ctx::InterLFNSTIdx(0))
(702)
firstBit = decodeBin(Ctx::LFNSTIdx(isSepTree ? 1 : 0))
secondBit = decodeBin(Ctx::LFNSTIdx(2 + firstBit))
lfnstIdx = firstBit + (secondBit ≪ 1)
lfnstIntra = 0
(710)
lfnstIdx
lfnstIdx != 0?
(703)
true
false
lfnstIdx += decodeBin(Ctx::InterLFNSTIdx(1))
(704)
lfnstIdx
lfnstIdx == 2?
(705)
true
false
lfnstIdx += decodeBin(Ctx::InterLFNSTIdx(2))
(706)
lfnstIdx
lfnstIdx != 0 && geoFlag?
(707)
true
false
lfnstIntra = decodeBin(Ctx::InterLFNSTIntraIdx())
(708)
lfnstIntra = 0
(709)
isLuma && eipFlag && lfnstIdx != c?
(711)
true
false
lfnstSecFlag = decodeBin(Ctx::LFNSTSec(0))
(712)
{lfnstIdx, lfnstIntra}
end of the reading from the bitstream of the LFNST/NSPT index lfnstIdx knowing that lfnstIdx is not inferred to 0 given available information and already read syntax
(713)

FIG. 15

<table>
<tr><th>intra/inter</th><th>syntax element of the prediction mode</th><th>idxMap$_{i}$<br>$i \in \{\mathrm{NSPT}, \mathrm{LFNST}\}$</th></tr>
<tr><td>intra</td><td>mipFlag being true</td><td>mipDimdMode</td></tr>
<tr><td></td><td>sgpmFlag being true</td><td>splitDir</td></tr>
<tr><td></td><td>tmpFlag being true</td><td>intraTmpDimdMode</td></tr>
<tr><td></td><td>timd being true</td><td>MAP131TO67(idxIntra)</td></tr>
<tr><td></td><td>tmrlFlag being true</td><td>MAP131TO67(idxIntra)</td></tr>
<tr><td></td><td>plIdx == 1</td><td>VER_IDX</td></tr>
<tr><td></td><td>plIdx == 2</td><td>HOR_IDX</td></tr>
<tr><td></td><td>eipFlag being true</td><td>eipDimdMode</td></tr>
<tr><td></td><td>idxIntra == PNN_IDX</td><td>idxMap$_{i}$ = nnDimdMode<br>if ((lfnstIdx == a || lfnstIdx == b)<br>&& lfnstSecFlag &&<br>isAllowedShape(h, w))<br>{<br>   idxMap$_{i}$ = PLANAR_IDX<br>}</td></tr>
<tr><td></td><td>Any other flag being true</td><td>idxIntra</td></tr>
<tr><td>inter</td><td>geoFlag being true</td><td>dimdDerivedIntraDir2nd if<br>lfnstIntra is true,<br>dimdDerivedIntraDir otherwise</td></tr>
<tr><td></td><td>Any other flag being true</td><td>dimdDerivedIntraDir</td></tr>
</table>

FIG. 16

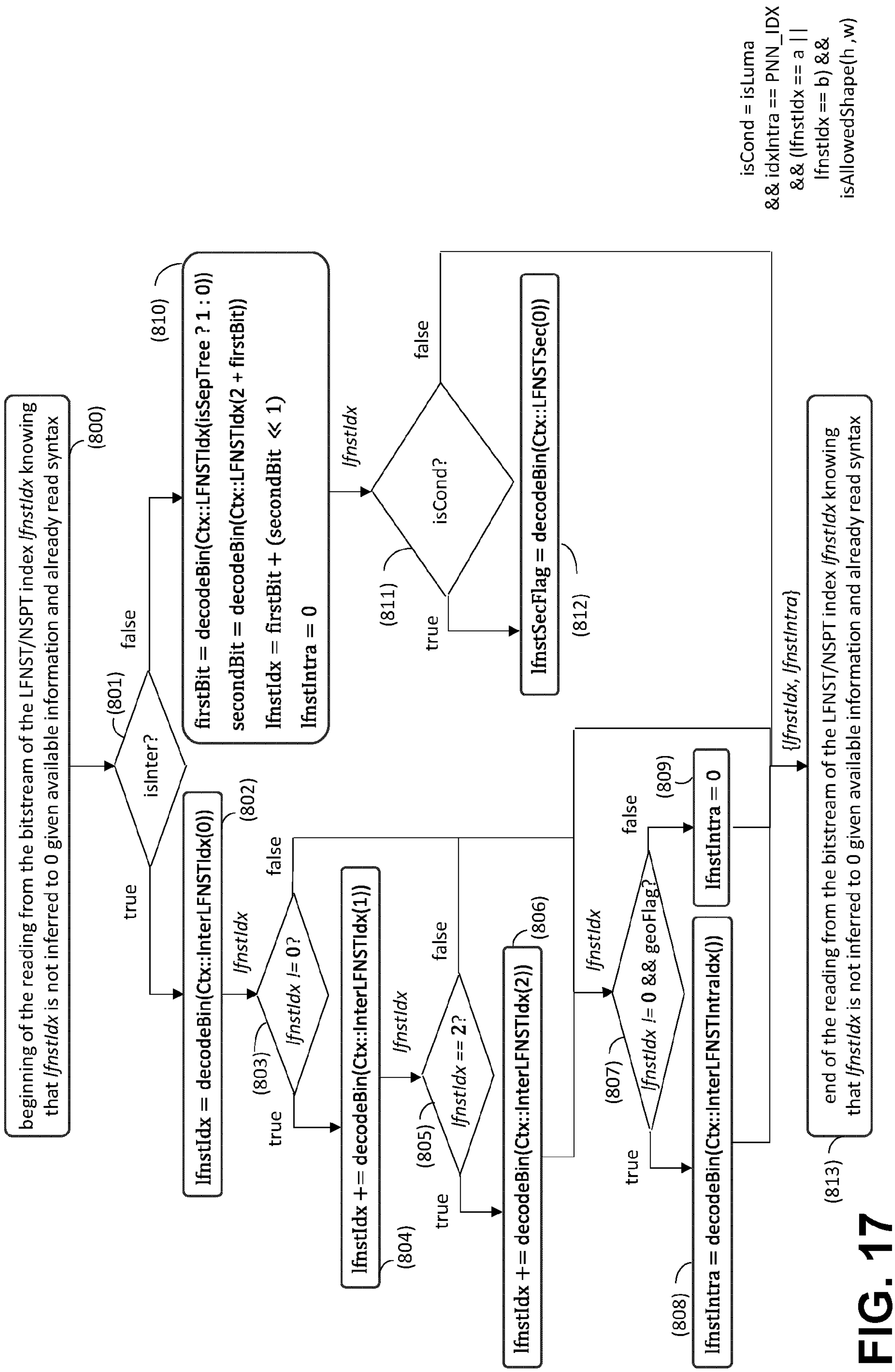
beginning of the reading from the bitstream of the LFNST/NSPT index lfnstIdx knowing that lfnstIdx is not inferred to 0 given available information and already read syntax
(800)
isInter?
(801)
true
false
lfnstIdx = decodeBin(Ctx::InterLFNSTIdx(0))
(802)
lfnstIdx
lfnstIdx != 0?
(803)
true
false
lfnstIdx += decodeBin(Ctx::InterLFNSTIdx(1))
(804)
lfnstIdx
lfnstIdx == 2?
(805)
true
false
lfnstIdx += decodeBin(Ctx::InterLFNSTIdx(2))
(806)
lfnstIdx
lfnstIdx != 0 && geoFlag?
(807)
true
false
lfnstIntra = decodeBin(Ctx::InterLFNSTIntraIdx())
(808)
lfnstIntra = 0
(809)
firstBit = decodeBin(Ctx::LFNSTIdx(isSepTree ? 1 : 0))
secondBit = decodeBin(Ctx::LFNSTIdx(2 + firstBit))
lfnstIdx = firstBit + (secondBit ≪ 1)
lfnstIntra = 0
(810)
lfnstIdx
isCond?
(811)
true
false
lfnstSecFlag = decodeBin(Ctx::LFNSTSec(0))
(812)
isCond = isLuma
&& idxIntra == PNN_IDX
&& (lfnstIdx == a | |
lfnstIdx == b) &&
isAllowedShape(h ,w)
{lfnstIdx, lfnstIntra}
end of the reading from the bitstream of the LFNST/NSPT index lfnstIdx knowing that lfnstIdx is not inferred to 0 given available information and already read syntax
(813)

FIG. 17

Europäisches Patentamt
European Patent Office
Office européen des brevets

# EUROPEAN SEARCH REPORT

Application Number
EP 24 30 6638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 2024/158549 A1 (GUANGDONG OPPO MOBILE TELECOMMUNICATIONS CORP LTD [CN]) 2 August 2024 (2024-08-02)<br>* abstract *<br>* paragraph [0065] *<br>* paragraph [0068] - paragraph [0070] *<br>* paragraph [0081] *<br>* paragraph [0092] *<br>* paragraph [0120] *<br>* paragraph [0132] - paragraph [0133] *<br>* tables 1-3 *<br>* figures 4,15 *<br>----- | 1-7,9-14<br><br><br>8 | INV.<br>H04N19/12<br>H04N19/157<br>H04N19/70 |
| X | WO 2024/129334 A1 (GUANGDONG OPPO MOBILE TELECOMMUNICATIONS CORP LTD [CN]) 20 June 2024 (2024-06-20)<br>* abstract *<br>* paragraph [0088] - paragraph [0092] *<br>* paragraph [0103] - paragraph [0104] *<br>* paragraph [0135] - paragraph [0137] *<br>* tables 1,2 *<br>* figures 12,13 *<br>----- | 1,2,7,9, 10 | TECHNICAL FIELDS SEARCHED (IPC) |
| X | US 2018/020218 A1 (ZHAO XIN [US] ET AL) 18 January 2018 (2018-01-18)<br>* abstract *<br>* paragraph [0033] - paragraph [0034] *<br>* paragraph [0132] - paragraph [0133] *<br>* paragraph [0222] - paragraph [0223] *<br>* paragraph [0231] *<br>* tables 1,2 *<br>* figures 1A-1E,8,9 *<br>-----<br>-/-- | 1-5,9-12 | H04N |

The present search report has been drawn up for all claims

1

| Place of search | Date of completion of the search | Examiner |
|---|---|---|
| The Hague | 18 March 2025 | Hampson, Frances |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 30 6638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH2025 ; m68146 26 June 2024 (2024-06-26), XP030319932, Retrieved from the Internet: URL:https://jvet-experts.org/doc_end_user/documents/34_Rennes/wg11/JVET-AH2025-v1.zip JVET-AH2025-v1.docx [retrieved on 2024-06-26] * section 3.1.20 Extrapolation filter-based intra prediction (EIP) mode * ----- | 8 | |

TECHNICAL FIELDS SEARCHED (IPC)

The present search report has been drawn up for all claims

1

| Place of search | Date of completion of the search | Examiner |
|---|---|---|
| The Hague | 18 March 2025 | Hampson, Frances |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 24 30 6638

This annex lists the patent family members relating to the patent documents cited in the above-mentioned European search report. The members are as contained in the European Patent Office EDP file on
The European Patent Office is in no way liable for these particulars which are merely given for the purpose of information.

18-03-2025

| Patent document cited in search report | Publication date | Patent family member(s) | Publication date |
|---|---|---|---|
| WO 2024158549 A1 | 02-08-2024 | NONE | |
| WO 2024129334 A1 | 20-06-2024 | NONE | |
| US 2018020218 A1 | 18-01-2018 | BR 112019000344 A2 | 24-04-2019 |
| | | CN 109691101 A | 26-04-2019 |
| | | EP 3485641 A1 | 22-05-2019 |
| | | JP 7033117 B2 | 09-03-2022 |
| | | JP 2019525575 A | 05-09-2019 |
| | | KR 20190027815 A | 15-03-2019 |
| | | US 2018020218 A1 | 18-01-2018 |
| | | US 2021195195 A1 | 24-06-2021 |
| | | US 2022385906 A1 | 01-12-2022 |
| | | WO 2018013953 A1 | 18-01-2018 |

EPO FORM P0459

For more details about this annex : see Official Journal of the European Patent Office, No. 12/82